# EUROPÄISCHE PATENTSCHRIFT

(11) **EP 2 164 907 B1**
(45) Veröffentlichungstag und Bekanntmachung des Hinweises auf die Patenterteilung: **22.02.2017**
(21) Anmeldenummer: 08774755.6
(22) Anmeldetag: 04.07.2008
(51) Int. Cl.: C09C 1/02, C09C 1/36, C09C 1/42, C09C 3/10, D21H 17/69, D21H 17/28, D21H 17/37, D21H 17/00, D21H 21/10, D21H 21/16

(54) **WÄSSRIGE ANSCHLÄMMUNGEN VON FEINTEILIGEN FÜLLSTOFFEN, VERFAHREN ZU IHRER HERSTELLUNG UND IHRE VERWENDUNG ZUR HERSTELLUNG VON PAPIEREN MIT HOHEM FÜLLSTOFFGEHALT UND HOHER TROCKENFESTIGKEIT**
AQUEOUS SUSPENSIONS OF FINE PARTICULATE FILLERS, METHOD FOR PRODUCING THE SAME AND USE THEREOF FOR PRODUCING PAPERS HAVING A HIGH FILLER CONTENT AND A HIGH DRY STRENGTH
SUSPENSIONS AQUEUSES DE CHARGES EN FINES PARTICULES, LEUR PROCÉDÉ DE PRÉPARATION ET LEUR UTILISATION POUR PRODUIRE DES PAPIERS À TENEUR EN CHARGES ET À RÉSISTANCE À SEC ÉLEVÉES

(30) Priorität: 05.07.2007 EP 07111859
(43) Veröffentlichungstag der Anmeldung: 24.03.2010
(73) Patentinhaber: BASF SE, 67056 Ludwigshafen am Rhein (DE)
(72) Erfinder: ESSER, Anton, 67117 Limburgerhof (DE); HÄHNLE, Hans-Joachim, 67435 Neustadt (DE)
(74) Vertreter: BASF IP Association
(86) Internationale Anmeldenummer: PCT/EP2008/058643
(87) Internationale Veröffentlichungsnummer: WO 2009/004078

(56) Entgegenhaltungen:
- WO-A-03/087472
- WO-A-2004/087818
- WO-A-2005/012637
- GB-A- 1 505 641

## Beschreibung

Die Erfindung betrifft wässrige Anschlämmungen von feinteiligen Füllstoffen, die zumindest teilweise mit einer Zusammensetzung aus mindestens einem wasserlöslichen amphoteren Copolymerisat und mindestens einer gequollenen Stärke überzogen sind, sowie ein Verfahren zu ihrer Herstellung und ihre Verwendung als Zusatz zum Papierstoff bei der Herstellung von Papieren mit hohem Füllstoffgehalt und hoher Trockenfestigkeit.

Bei der Herstellung füllstoffhaltiger Papiere wird die Füllstoffslurry zu der Fasersuspension zugegeben, bevor diese zum Former der Papiermaschine weitergeleitet wird. Ein Retentionsmittel oder ein Retentionsmittelsystem wird in der Regel zu der Füllstoff/Faserstoffsuspension zugesetzt, um soviel wie möglich Füllstoff im Papierblatt zu retenieren. Die Zugabe des Füllstoffs zum Papier gibt dem Papiermacher die Möglichkeit, zahlreiche Verbesserungen der Blatteigenschaften zu erreichen. Dazu gehören Eigenschaften wie die Opazität, Weisse, Haptik und Bedruckbarkeit.

Wenn darüber hinaus der Füllstoff billiger ist als der Faserstoff, kann die Zugabe oder vermehrte Zugabe von Füllstoff zu einer Reduzierung des Faserstoffanteils und damit zu einer Reduzierung der Herstellkosten des Papiers führen. Füllstoffhaltige Papiere bzw. Papiere mit besonders hohem Füllstoffgehalt lassen sich leichter trocken als nicht füllstoffhaltige Papiere bzw. als Papiere mit geringerem Füllstoffgehalt. Als Folge daraus kann die Papiermaschine schneller und mit niedrigerem Dampfverbrauch betrieben werden, was sowohl die Produktivität erhöht als auch die Kosten senkt.

Jedoch bringt die Füllstoffzugabe zur Fasersuspension auch Nachteile mit sich, die nur teilweise durch die Zugabe weiterer Papierhilfsmittel kompensiert werden können. Für ein gegebenes Flächengewicht gibt es Grenzen bezüglich der einsetzbaren Füllstoffmenge. Die Festigkeitseigenschaften des Papiers sind normalerweise die wichtigsten Parameter, die die Füllstoffmenge im Papier limitieren. Auch andere Faktoren, wie die Füllstoffretention, die Entwässerung der Papierstoffsuspension sowie ein eventuell erhöhter Chemikalienbedarf bei Retention und Leimung können hier eine Rolle spielen.

Der Verlust von Festigkeitseigenschaften von Papieren kann in machen Fällen ganz oder teilweise durch den Einsatz von Trocken- und Nassverfestigern kompensiert werden. Eine gängige Vorgehensweise ist dabei die Zugabe von kationischer Stärke als Trockenverfestiger in den Papierstoff. Ebenso werden synthetische Trocken- und Nassverfestiger z. B. auf der Basis kationischer oder anionischer Polyacrylamide eingesetzt. Die Zugabemenge und die verfestigende Wirkung sind jedoch in den meisten Fällen begrenzt. Im gleichen Maße ist auch die kompensierende Wirkung im Bezug auf den Festigkeitsverlust durch Füllstofferhöhung und damit auch die überhaupt realisierbare Füllstoffzunahme begrenzt. Darüber hinaus werden nicht alle Festigkeitseigenschaften in gleichem Maße und in manchen Fällen überhaupt nur unzureichend durch den Einsatz von Trockenverfestigern erhöht. Ein wichtiges Beispiel dafür ist die Weiterreisarbeit, die durch den Einsatz von Stärke oder synthetischen Trockenverfestigern im Vergleich zu anderen Festigkeitsparametern nur geringfügig beeinflusst wird. Die Erhöhung des Füllstoffgehaltes im Papier hat dagegen in der Regel einen sehr stark negativen Einfluss auf die Weiterreisarbeit.

Weitere wichtige Eigenschaften sind die Dicke sowie die Steifigkeit des Papiers. Die Erhöhung des Füllstoffgehaltes führt bei gleichem Flächengewicht zu einer Zunahme der Papierdichte und einer Abnahme der Dicke des Papierblattes. Letzteres führt zu einer erheblichen Abnahme der Papiersteifigkeit. Diese Abnahme der Papiersteifigkeit kann in vielen Fällen nicht allein durch den Einsatz von Trockenverfestigern ausgeglichen werden. Häufig sind zusätzliche Maßnahmen wie etwa die Reduzierung des mechanischen Druckes in der Pressenpartie in den Glättwerken, in Kalandern oder in der Trockenpartie der Papiermaschine notwendig. Letzteres kompensiert den Dickeverlust durch Füllstofferhöhung ganz oder teilweise.

In der Literatur sind einige Füllstoffsysteme beschrieben. Aus der WO 01/86067 A1 ist die Modifizierung von Füllstoffen mit hydrophoben Polymeren bekannt, wobei die Füllstoffteilchen mit dem hydrophoben Polymeren überzogen werden. Die hydrophoben Polymeren gemäß WO 01/86067 A1 sind stärkehaltig. Die damit hergestellten Papiere weisen verbesserte Eigenschaften wie Nassfestigkeit auf.

Aus der JP-A 08059740 ist bekannt, dass man zu wässrigen Suspensionen von anorganischen Teilchen amphotere wasserlösliche Polymeren zusetzt, wobei zumindest ein Teil der Polymeren auf der Füllstoffoberfläche adsorbiert wird. Die amphoteren Polymeren werden vorzugsweise durch Hydrolysieren von Copolymerisaten aus N-Vinylformamid, Acrylnitril und Acrylsäure in Gegenwart von Säuren hergestellt. Sie enthalten 20 bis 90 Mol-% Amidineinheiten der Struktur 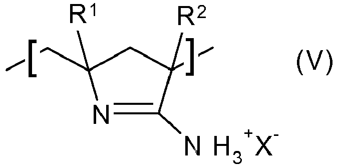 in der R¹ und R² jeweils H oder eine Methylgruppe und X- ein Anion bedeuten. Die mit solchen Polymeren behandelten Füllstoffslurries werden bei der Herstellung von füllstoffhaltigen Papieren dem Papierstoff zugesetzt. Die Füllstoffbehandlung führt zu einer Verbesserung der Entwässerung des Papierstoffs und ergibt außerdem eine Verbesserung verschiedener Festigkeitseigenschaften des getrockneten Papiers sowie eine Verbesserung der Füllstoffretention.

In der US 2002/0088579 A1 wird die Vorbehandlung von anorganischen Füllstoffen mit kationischen, anionischen und amphoteren (zwitterionischen) Polymeren beschrieben. Die Behandlung besteht dabei in jedem Fall aus mindestens zwei Stufen. Empfohlen wird zuerst die Behandlung mit einem kationischen Polymer und anschließend die Behandlung mit einem anionischen Polymer. In weiteren Schritten können alternierend wieder weitere kationische und anionische Polymere adsorbiert werden. Die wässrigen Suspensionen mit den vorbehandelten Füllstoffteilchen werden bei der Herstellung von füllstoffhaltigem Papier dem Papierstoff zugesetzt. Die Füllstoffbehandlung führt zu einer Verbesserung verschiedener Festigkeitseigenschaften des getrockneten Papiers.

Die WO 04/087818 A1 beschreibt wässrige Anschlämmungen von feinteiligen Füllstoffen, die zumindest teilweise mit Polymerisaten überzogen sind und die erhältlich sind durch Behandeln von wässrigen Anschlämmungen feinteiliger Füllstoffe mit mindestens einem wasserlöslichen amphoteren Copolymerisat, das erhältlich ist durch Copolymerisieren von
a) mindestens einem N-Vinylcarbonsäureamid der Formel 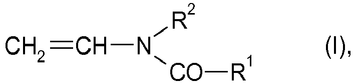 in der R¹, R² = H oder C₁- bis C₆-Alkyl bedeuten,
b) mindestens einer monoethylenisch ungesättigten Carbonsäure mit 3 bis 8 C-Atomen im Molekül und/oder deren Alkalimetall-, Erdalkalimetall- oder Ammoniumsalzen und gegebenenfalls
c) anderen monoethylenisch ungesättigten Monomeren, die frei von Nitrilgruppen sind, und gegebenenfalls
d) Verbindungen, die mindestens zwei ethylenisch ungesättigte Doppelbindungen im Molekül aufweisen,
und anschließende teilweise oder vollständige Abspaltung der Gruppen -CO-R¹ aus den in das Copolymerisat einpolymerisierten Monomeren (I).

Aus der WO 05/012637 A1 sind wässrige Zusammensetzungen, umfassend wenigstens einen feinteiligen Füllstoff und wenigstens ein wasserlösliches amphoteres Copolymerisat, das erhältlich ist durch Copolymerisieren eines Monomergemischs, enthaltend
a) wenigstens ein N-Vinylcarbonsäureamid der allgemeinen Formel 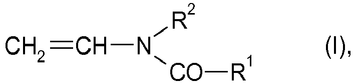 worin R¹ und R² unabhängig voneinander für H oder C₁- bis C₆-Alkyl stehen,
b) wenigstens ein Monomer, das ausgewählt ist unter monoethylenisch ungesättigten Sulfonsäuren, Phosphonsäuren, Phosphorsäureestern und Derivaten davon,
c) gegebenenfalls wenigstens ein Monomer, das ausgewählt ist unter monoethylenisch ungesättigten Mono- und Dicarbonsäuren, deren Salzen und Dicarbonsäureanhydriden,
d) gegebenenfalls wenigstens ein von den Komponenten a) bis c) verschiedenes monoethylenisch ungesättigtes Monomer, das frei von Nitrilgruppen ist, und
e) gegebenenfalls wenigstens eine Verbindung, die mindestens zwei ethylenisch ungesättigte Doppelbindungen im Molekül aufweist,
mit der Maßgabe, dass das Monomergemisch wenigstens ein Monomer b) oder c) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (I), bekannt.

Durch die genannten Veröffentlichungen sind demnach Verfahren bekannt, die die Behandlung von Füllstoffen durch amphotere synthetische Polymere vor der Zugabe der Füllstoffslurry zum Faserstoff und die anschließende Bildung des Papierblattes beschreiben. Insbesondere in WO 04/087818 A1 und WO 05/012637 A1 wurde gezeigt, dass die Papierblätter mit vorheriger Behandlung des Füllstoffes, eine erhebliche Zunahme verschiedener Trockenfestigkeitsparameter wie z. B. der Reislänge und der inneren Festigkeit aufweisen.

Aus der WO 03/087472 A1 ist ein Verfahren bekannt, das die Behandlung von Füllstoffen mit einer Zusammensetzung bestehend aus gequollenen Stärkepartikeln und Latices beschreibt. Die in dieser Schrift eingesetzten Latices sind wasserunlöslich und liegen in Form einer Dispersion vor. Nach separater Herstellung dieser Zusammensetzung wird diese zur Füllstoffslurry zugegeben, abschließend erfolgt die Zugabe zum Faserstoff und die Blattbildung. Gemäß der Lehre der WO 03/087472 A1 handelt es sich bei den Stärkepartikeln um gequollene Stärkepartikel. Weiterhin kann die Zusammensetzung noch andere Coadditive wie anionische oder kationische Coadditive enthalten. Wasserlösliche amphotere Copolymere werden in WO 03/087472 A1 Aus der GB1505641 ist ein Verfahren bekannt, dass die Behandlung von positiv geladenen Füllstoffen, hergestellt durch die Behandlung eines Füllstoffes mit positiv geladener Stärke, mit einem anionischen Latex beschreibt. Die Verwendung wasserlöslicher amphoterer Copolymere wird in GB1505641 nicht offenbart.

Der vorliegenden Erfindung lag daher die Aufgabe zugrunde, weitere alternative wässrige Anschlämmungen von feinteiligen Füllstoffen zur Verfügung zu stellen, die bei der Herstellung von Papier mit hohem Füllstoffgehalt einsetzbar sind. Die damit hergestellten Papiere sollen Festigkeitseigenschaften aufweisen, die mit denen herkömmlicher Papiere mit niedrigem Füllstoffgehalt vergleichbar sind. Zu diesen Festigkeitseigenschaften zählen vor allem die Trockenreislänge, die innere Festigkeit sowie die Steifigkeit des Papiers.

Die Aufgabe wird erfindungsgemäß gelöst mit wässrigen Anschlämmungen von feinteilige Füllstoffen, die zumindest teilweise mit einer Zusammensetzung aus mindestens einem wasserlöslichen amphoteren Copolymerisat und mindestens einer gequollenen Stärke überzogen sind.

In einer ersten bevorzugten Ausführungsform (Ausführungsform A) sind die erfindungsgemäßen wässrigen Anschlämmungen erhältlich durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomergemischs von
(a) wenigstens einem N-Vinylcarbonsäureamid der allgemeinen Formel 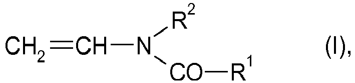 worin R¹ und R² unabhängig voneinander für H oder C₁- bis C₆-Alkyl stehen,
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (a).

In einer anderen, zweiten bevorzugten Ausführungsform (Ausführungsform B) sind die erfindungsgemäßen wässrigen Anschlämmungen erhältlich durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomergemischs von
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protonierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

Die wässrigen Anschlämmungen enthalten beispielsweise 1 bis 70 Gew.-%, bevorzugt 5 bis 50 Gew.-%, besonders bevorzugt 10 bis 40 Gew.-%, mindestens eines feinteiligen Füllstoffes. Die Menge an wasserlöslichen amphoteren Copolymerisat beträgt beispielsweise 0,01 bis 5 Gew.-%, vorzugsweise 0,05 bis 2,5 Gew.-%, besonders bevorzugt 0,05 bis 1 Gew.-%, bezogen auf den Füllstoff. Die Dosiermenge der Stärke beträgt beispielsweise 0,1 bis 10 Gew.-%, vorzugsweise 0,5 bis 5 Gew.-%, bezogen auf den Füllstoff.

Gegenstand der vorliegenden Erfindung ist weiterhin ein Verfahren zur Herstellung der wässrigen Anschlämmungen, wobei man einer wässrigen Anschlämmung mindestens eines feinteiligen Füllstoffes mit 0,01 bis 5 Gew.-%, bezogen auf den Füllstoff, mindestens eines wasserlösliches amphoteres Copolymerisats und mit 0,1 bis 10 Gew.-%, bezogen auf den Füllstoff, mindestens einer gequollenen Stärke behandelt.

In einer ersten bevorzugten Ausführungsform des erfindungsgemäßen Verfahrens sind die wässrigen Anschlämmungen der Ausführungsform A erhältlich durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomergemischs von
(a) wenigstens einem N-Vinylcarbonsäureamid der allgemeinen Formel 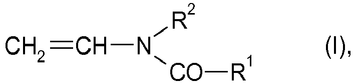 worin R¹ und R² unabhängig voneinander für H oder C₁- bis C₆-Alkyl stehen,
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (a).

In einer anderen, zweiten bevorzugten Ausführungsform des erfindungsgemäßen Verfahrens sind wässrigen Anschlämmungen der Ausführungsform B erhältlich durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomergemischs von
(b) wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protonierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

Im Rahmen der vorliegenden Erfindung umfasst der Ausdruck Alkyl geradkettige oder verzweigte Alkylgruppen. Geeignete Alkylgruppen sind C₁-C₆-Alkyl wie beispielsweise Methyl, Ethyl, Propyl, Isopropyl, n-Butyl, sec-Butyl, tert.-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Die wässrigen Anschlämmungen der Ausführungsform A enthalten jeweils wenigstens ein Monomer der Gruppe (a) und (b) sowie gegebenenfalls wenigstens ein Monomer der Gruppe (c) und gegebenenfalls wenigstens ein Monomer der Gruppe (d). Im Folgenden werden wasserlösliche amphotere Copolymerisate für wässrige Anschlämmungen der Ausführungsform A näher beschrieben.

Beispiele für Monomere der Gruppe (a) sind offenkettige N-Vinylamidverbindungen der Formel (I) wie beispielsweise N-Vinylformamid, N-Vinyl-N-methylformamid, N-Vinylacetamid, N-Vinyl-N-methylacetamid, N-Vinyl-N-ethylacetamid, N-Vinylpropionamid und N-Vinyl-N-methylpropionamid und N-Vinylbutyramid. Die Monomeren der Gruppe (a) können allein oder in Mischung bei der Copolymerisation mit den Monomeren der anderen Gruppen eingesetzt werden.

Die erfindungsgemäßen wässrigen Anschlämmungen enthalten wenigstens ein Monomer der Gruppe (b), wobei diese ausgewählt sind aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden.

Als Monomere der Gruppe (b₁) sind Verbindungen geeignet, die einen organischen Rest mit einer polymerisierbaren, α,β-ethylenisch ungesättigten Doppelbindung und einer Sulfonsäure- oder Phosphonsäuregruppe pro Molekül aufweisen. Geeignet sind weiterhin die Salze und Ester der zuvor genannten Verbindungen. Bei den Estern der Phosphonsäuren kann es sich dabei um die Mono- oder die Diester handeln. Geeignete Monomere (b₁) sind weiterhin Ester der Phosphorsäure mit Alkoholen mit einer polymersierbaren, α,β-ethylenisch ungesättigten Doppelbindung. Dabei kann eines oder können die beiden übrigen Protonen der Phosphorsäuregruppe durch geeignete Basen neutralisiert oder mit Alkoholen, die keine polymerisierbaren Doppelbindungen aufweisen, verestert werden.

Geeignete Basen zur teilweisen oder vollständigen Neutralisation der Säuregruppen der Monomere (b₁) sind beispielsweise Alkalimetall- oder Erdalkalimetallbasen, Ammoniak, Amine und/oder Alkanolamine. Beispiele hierfür sind Natriumhydroxid, Kaliumhydroxid, Natriumcarbonat, Kaliumcarbonat, Natriumhydrogencarbonat, Kaliumhydrogencarbonat, Magnesiumhydroxid, Magnesiumoxid, Calciumhydroxid, Calciumoxid, Triethanolamin, Ethanolamin, Morpholin, Diethylentriamin oder Tetraethylenpentamin. Geeignete Alkohole zur Veresterung der Phosphorsäure sind beispielsweise C₁-C₆-Alkanole, wie beispielsweise Methanol, Ethanol, n-Propanol, Isopropanol, n-Butanol, sec-Butanol, tert.-Butanol, n-Pentanol, n-Hexanol sowie deren Isomere.

Zu den Monomeren (b₁) zählen beispielsweise Vinylsulfonsäure, Allylsulfonsäure, Methallylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, Acrylamidomethylenphosphonsäure, 2-Acrylamido-2-methylpropansulfonsäure, Vinylphsophonsäure, CH₂=CH-NH-CH₂-PO₃H, Vinylphosphonsäuremonomethylester, Vinylphosphonsäuredimethylester, Allylphosphonsäure, Allylphosphonsäuremonomethylester, Allylphosphonsäuredimethylester, Acrylamidomethylpropylphosphonsäure, (Meth)acrylethylenglykolphosphat und Phosphorsäuremonoallylester.

Werden als Komponente (b₁) ausschließlich Monomere eingesetzt, bei denen alle Protonen der Säuregruppen verestert sind, wie z.B. Vinylphosphonsäuredimethylester oder Allylphosphonsäuredimethylester, so wird zur Polymerisation wenigstens eine monoethylenisch ungesättigte Mono- und/oder Dicarbonsäure oder ein Salz davon eingesetzt, wie sie im Folgenden als Komponente (b₂) beschrieben werden. Somit ist sichergestellt, dass die erfindungsgemäß eingesetzten Copolymerisate anionogene/anionische Gruppen aufweisen. Alternativ dazu können auch die Bedingungen für die Hydrolyse so gewählt werden, dass die Estergruppen teilweise abgespalten werden.

Die zuvor genannten Monomere (b₁) können einzeln oder in Form von beliebigen Mischungen eingesetzt werden.

Als Monomere der Gruppe (b₂) kommen monoethylenisch ungesättigte Carbonsäuren mit 3 bis 8 C-Atomen sowie die wasserlöslichen Salze wie Akalimetall-, Erdalkalimetall- oder Ammoniumsalze dieser Carbonsäuren und die monoethylenisch ungesättigten Carbonsäureanhydride in Betracht. Zu dieser Gruppe von Monomeren gehören beispielsweise Acrylsäure, Methacrylsäure, Dimethacrylsäure, Ethacrylsäure, α-Chloracrylsäure, Maleinsäure, Maleinsäureanhydrid, Fumarsäure, Itaconsäure, Mesaconsäure, Citraconsäure, Glutaconsäure, Aconitsäure, Methylenmalonsäure, Allylessigsäure, Vinylessigsäure und Crotonsäure. Die Monomeren dieser Gruppe (b₂) können allein oder in Mischung miteinander, in teilweise oder in vollständig neutralisierter Form bei der Copolymerisation eingesetzt werden. Zur Neutralisation geeignete Basen sind die bei der Komponente (b₁) genannten.

Erfindungsgemäß enthält das wasserlösliche amphotere Copolymerisat wenigstens ein Monomer aus der Gruppe (b), das ausgewählt ist aus den Untergruppen (b₁) und (b₂). Selbstverständlich kann das wasserlösliche amphotere Copolymerisat auch Mischungen von Monomeren aus den Untergruppen (b₁) und (b₂) enthalten.

Die Copolymerisate können zur Modifizierung gegebenenfalls wenigstens ein weiteres Monomer der Gruppe (c) in einpolymerisierter Form enthalten. Vorzugsweise sind diese Monomere ausgewählt unter Estern α,β-ethylenisch ungesättigter Mono- und Dicarbonsäuren mit C₁-C₃₀-Alkanolen, C₂-C₃₀-Alkandiolen und C₂-C₃₀-Aminoalkoholen, Amiden α,β-ethylenisch ungesättigter Monocarbonsäuren und deren N-Alkyl- und N,N-Dialkylderivaten, Nitrile von α,β-ethylenisch ungesättigten Mono- und Dicarbonsäuren, Estern von Vinylalkohol und Allylalkohol mit C₁-C₃₀-Monocarbonsäuren, N-Vinyllactamen, stickstoffhaltigen Heterocyclen mit α,β-ethylenisch ungesättigten Doppelbindungen, Vinylaromaten, Vinylhalogeniden, Vinylidenhalogeniden, C₂-C₈-Monoolefinen und Mischungen davon.

Geeignete Vertreter dieser Gruppe (c) sind außerdem z.B. Methyl(meth)acrylat, Methylethacrylat, Ethyl(meth)acrylat, Ethylethacrylat, n-Butyl(meth)acrylat, Isobutyl(meth)acrylat, tert.-Butyl(meth)acrylat, tert.-Butylethacrylat, n-Ocytl(meth)acrylat, 1,1,3,3-Tetramethylbutyl(meth)acrylat, Ethylhexyl(meth)acrylat und Mischungen davon.

Geeignete zusätzliche Monomere (c) sind weiterhin die Ester von α,β-ethylenisch ungesättigten Mono- und Dicarbonsäuren mit Aminoalkoholen, vorzugsweise C₂-C₁₂-Aminoalkoholen. Diese können am Aminstickstoff C₁-C₈-monoalkyliert oder -dialkyliert sein. Als Säurekomponente dieser Ester eignen sich z.B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Dazu zählen beispielsweise N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Geeignete zusätzliche Monomere (c) sind weiterhin Acrylsäureamid, Methacrylsäureamid, N-Methyl(meth)acrylamid, N-Ethyl(meth)acrylamid, n-Propyl(meth)acrylamid, N-(n-Butyl)(meth)acrylamid, tert.-Butyl(meth)acrylamid, n-Octyl(meth)acrylamid, 1,1,3,3-Tetramethylbutyl(meth)acrylamid, Ethylhexyl(meth)acrylamid und Mischungen davon.

Weiterhin sind als Monomere (c) geeignet 2-Hydroxyethyl(meth)acrylat, 2-Hydroxyethylethacrylat, 2-Hydroxypropyl(meth)acrylat, 3-Hydroxypropyl(meth)acrylat, 3-Hydroxybutyl(meth)acrylat, 4-Hydroxybutyl(meth)acrylat, 6-Hydroxyhexyl(meth)acrylat und Mischungen davon.

Darüber hinaus sind als weitere Monomere (c) N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[2-(Diethylamino)ethyl]methacrylamid und Mischungen davon geeignet.

Weiterhin geeignete Monomere der Gruppe (c) sind Nitrile von α,β-ethylenisch ungesättigten Mono- und Dicarbonsäuren, wie beispielsweise Acrylnitril und Methacrylnitril.

Geeignete Monomere (c) sind weiterhin N-Vinyllactame und deren Derivate, die z.B. einen oder mehrere C₁-C₆-Alkylsubstituenten (wie oben definiert) aufweisen können. Dazu zählen N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam und deren Mischungen.

Weiterhin sind als Monomere (c) N-Vinylimidazole und Alkylvinylimidazole geeignet, insbesondere Methylvinylimidazole wie beispielsweise 1-Vinyl-2-methylimidazol, 3-Vinylimidazol-N-oxid, 2- und4-Vinylpyridin-N-oxide sowie betainische Derivate und Quaternisierungsprodukte dieser Monomere.

Geeignete zusätzliche Monomere sind weiterhin Ethylen, Propylen, Isobutylen, Butadien, Styrol, α-Methylstyrol, Vinylacetat, Vinylpropionat, Vinylchlorid, Vinylidenchlorid, Vinylfluorid, Vinylidenfluorid und Mischungen davon.

Die zuvor genannten Monomere (c) können einzeln oder in Form von beliebigen Mischungen eingesetzt werden.

Eine weitere Modifizierung der Copolymerisate ist dadurch möglich, dass man bei der Copolymerisation Monomere (d) einsetzt, die mindestens zwei Doppelbindungen im Molekül enthalten, z.B. Methylenbisacrylamid, Glykoldiacrylat, Glykoldimethacrylat, Glycerintriacrylat, Pentaerythrittriallylether, mindestens zweifach mit Acrylsäure und/oder Methacrylsäure veresterte Polyalkylenglykole oder Polyole wie Pentaerythrit, Sobit oder Glukose. Falls mindestens ein Monomer der Gruppe (d) bei der Copolymerisation eingesetzt wird, so betragen die angewendeten Mengen bis zu 2 Mol-%, z. B. 0,001 bis 1 Mol-%.

In einer bevorzugten Ausführungsform wird zur Polymerisation ein Monomergemisch eingesetzt, wobei die Komponente (b) entweder nur aus Monomeren (b₁) oder nur aus Monomeren der Untergruppe (b₂) besteht, mit der Maßgabe, dass das Monomerengemisch mindestens ein Monomer (b) mit mindestens einer freien Säuregruppe und/oder einer Säuregruppe in Salzform enthält.

In einer besonders bevorzugten Ausführungsform werden zur Polymerisation mit den Monomeren (a) der Formel (I) nur Monomere der Untergruppe (b₂) eingesetzt.

Die erfindungsgemäß eingesetzten wasserlöslichen amphoteren Copolymerisate für wässrige Anschlämmungen der Ausführungsform A sind beispielsweise erhältlich durch radikalische Copolymerisation von
(a) 1 bis 99 Gew.-%, bevorzugt 5 bis 95 Gew.-%, insbesondere 20 bis 90 Gew.-%, bezogen auf das Gesamtgewicht der zur Polymerisation eingesetzten Monomere, wenigstens eines N-Vinylcarbonsäureamids der allgemeinen Formel 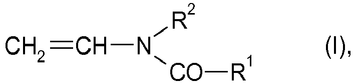 worin R¹ und R² unabhängig voneinander für H oder C₁- bis C₆-Alkyl stehen,
(b) 1 bis 99 Gew.-%, bevorzugt 5 bis 95 Gew.-%, insbesondere 10 bis 80 Gew.-%, bezogen auf das Gesamtgewicht der zur Polymerisation eingesetzten Monomere, wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
   bevorzugt 1 bis 99 Gew.-%, besonders bevorzugt 5 bis 95 Gew.-%, insbesondere bevorzugt 10 bis 80 Gew.-%, bezogen auf das Gesamtgewicht der zur Polymerisation eingesetzten Monomere, wenigstens einem Monomer, das ausgewählt ist aus der Untergruppe (b₂),
(c) 0 bis 30 Gew.-%, bevorzugt 0,1 bis 25 Gew.-%, insbesondere 1 bis 15 Gew.-%, bezogen auf das Gesamtgewicht der zur Polymerisation eingesetzten Monomere, wenigstens einem von den Komponenten (a) und (b) verschiedenen monoethylenisch ungesättigten Monomer, und
(d) 0 bis 5 Gew.-%, bevorzugt 0,0001 bis 3 Gew.-%, bezogen auf das Gesamtgewicht der zur Polymerisation eingesetzten Monomere, wenigstens einer Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließender teilweiser oder vollständiger Hydrolyse der in das Copolymerisat einpolymerisierten Monomeren (a).

Beispielsweise sind solche wasserlöslichen amphoteren Copolymerisate für wässrige Anschlämmungen der Ausführungsform A bevorzugt, die durch Copolymerisieren von
(a) wenigstens einem N-Vinylcarbonsäureamid der allgemeinen Formel 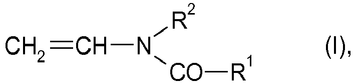 worin R¹ und R² unabhängig voneinander für H oder C₁- bis C₆-Alkyl stehen,
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
und anschließende teilweise oder vollständige Hydrolyse der Gruppen -CO-R¹ aus den in das Copolymerisat einpolymerisierten Monomeren (a) hergestellt werden.

Besonders bevorzugt sind solche wasserlöslichen amphoteren Copolymerisate für wässrige Anschlämmungen der Ausführungsform A, die erhältlich sind durch Copolymerisieren von
(a) N-Vinylformamid,
(b) Acrylsäure, Methacrylsäure und/oder deren Allkalimetall- oder Ammoniumsalzen, und
(c) gegebenenfalls anderen monoethylenisch ungesättigten Monomeren,
und anschließende teilweise oder vollständige Hydrolyse der in den Copolymerisaten enthaltenen Vinylformamideinheiten.

Die Hydrolyse der nach dem oben beschriebenen Verfahren erhaltenen wasserlöslichen amphoteren Copolymerisate für wässrige Anschlämmungen der Ausführungsform A erfolgt nach bekannten Verfahren durch Einwirkung von Säuren, Basen oder Enzymen, beispielsweise Salzsäure, Natronlauge oder Kalilauge. Hierbei entstehen aus den einpolymerisierten Monomeren (a) der oben angegebenen Formel (I) durch Abspaltung der -CO-R¹-Gruppe Copolymerisate, die Vinylamineinheiten der Formel (II) und/oder Amidineinheiten der Formel (III) und/oder (IV) enthalten, 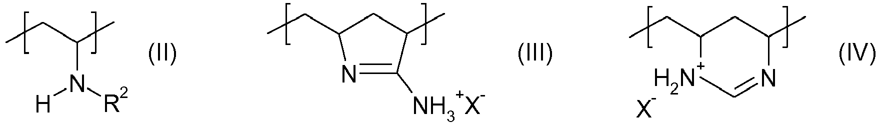 wobei in den Amidineinheiten (III) und (IV) X⁻ jeweils ein Anion bedeutet.

Das ursprünglich anionische Copolymerisat erhält dadurch kationische Gruppen und wird somit amphoter.

Die Amidineinheiten (III) bzw. (IV) entstehen durch Reaktion benachbarter Vinylaminheiten der Formel (II) mit Vinylformamideinheiten bzw. durch Reaktion benachbarter Vinylamineinheiten der Formel (II) mit (Meth)acrylnitrilgruppen. Im Folgenden wird für die wasserlöslichen amphoteren Copolymerisate immer die Summe von Vinylamin- und Amidineinheiten angegeben, die aus den einpolymerisierten Einheiten der N-Vinylcarbonsäureamide entstehen.

Die Hydrolyse der Monomeren ist beispielsweise in EP 0 672 212 B1 auf Seite 4, Zeilen 38 - 58 und auf Seite 5, Zeilen 1 - 25 offenbart. Bevorzugt werden hydrolysierte Copolymerisate eingesetzt, bei der die Hydrolyse in Gegenwart von Basen, bevorzugt in Gegenwart von Natronlauge, durchgeführt wurde. Der Hydrolysegrad der einpolymerisierten Vinylcarbonsäureamidgruppen beträgt beispielsweise 0,1 bis 100 Mol-%, meistens 1 bis 98 Mol-%, vorzugsweise 10 bis 80 Mol-%. Besonders bevorzugt ist der Hydrolysegrad so zu wählen, dass kationische und anionische Ladungen im wasserlöslichen amphoteren Copolymerisat in etwa ausgeglichen sind, wobei die Abweichung von der Ladungsgleichheit in der Regel nicht mehr als 20 % beträgt.

Die hydrolysierten Copolymerisate enthalten beispielsweise
(i) 1 bis 98 Mol-%, vorzugsweise 1 bis 75 Mol-% Vinylcarbonsäureamideinheiten,
(ii) 1 bis 98 Mol-%, vorzugsweise 1 bis 55 Mol-% Einheiten von monoethylenisch ungesättigten Sulfonsäuren, Phosphonsäuren, Phosphorsäureestern, Derivaten davon, oder Einheiten von monoethylenisch ungesättigten Mono- und Dicarbonsäuren, deren Salzen und Dicarbonsäureanhydriden,
   bevorzugt 1 bis 98 Mol-%, vorzugsweise 1 bis 55 Mol-% Einheiten mindestens einer monoethylenisch ungesättigten Carbonsäure mit 3 bis 8 C-Atomen,
(iii) 1 bis 98 Mol-%, vorzugsweise 1 bis 55 Mol-% Vinylamineinheiten der Formel (II) und/oder Amidineinheiten der Formel (III) und/oder (IV), und
(iv) bis zu 30 Mol-% Einheiten von anderen monoethylenisch ungesättigten Verbindungen.

Besonders bevorzugt sind solche hydrolysierten Copolymerisate, die
(i) 5 bis 70 Mol-% Vinylcarbonsäureamideinheiten,
(ii) 3 bis 30 Mol-% Einheiten von monoethylenisch ungesättigten Sulfonsäuren, Phosphonsäuren und Salzen davon, oder 5 bis 45 Mol-% Einheiten von Acrylsäure, Methacrylsäure, Salzen und Gemischen davon,
   bevorzugt 15 bis 45 Mol-% Acrylsäure- und/oder Methacrylsäureeinheiten, und
(iii) 10 bis 50 Mol-% Vinylamineinheiten in Salzform und/oder Amidineinheiten der Formel (III) und/oder (IV)
enthalten.

Wie zuvor beschrieben, sind auch wässrigen Anschlämmungen der Ausführungsform B bevorzugt. Die wässrigen Anschlämmungen der Ausführungsform B enthalten jeweils wenigstens ein Monomer der Gruppen (b) und (e) sowie gegebenenfalls wenigstens ein Monomer der Gruppe (f) und gegebenenfalls wenigstens ein Monomer der Gruppe (d). Im Folgenden werden wasserlösliche amphotere Copolymerisate für wässrige Anschlämmungen der Ausführungsform B näher beschrieben.

Die Monomeren der Gruppe (b) sind identisch mit denen der Gruppe (b) der wasserlöslichen amphoteren Copolymerisate für wässrige Anschlämmungen der Ausführungsform A. Ebenfalls identisch in beiden Ausführungsformen A und B sind die Monomeren der Gruppe (d), bei denen es sich um Verbindungen handelt, die mindestens zwei ethylenisch ungesättigte Doppelbindungen im Molekül aufweisen.

Daher gelten für die Monomeren der Gruppen (b) und (d) die zuvor gemachten Auflistungen inklusive der bevorzugten Ausführungsformen.

Geeignete Monomere der Gruppe (e) sind die Ester von α,β-ethylenisch ungesättigten Mono- und Dicarbonsäuren mit Aminoalkoholen, vorzugsweise C₂-C₁₂-Aminoalkoholen. Diese können am Aminstickstoff C₁-C₈-monoalkyliert oder-dialkyliert sein. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden Acrylsäure, Methacrylsäure und deren Gemische eingesetzt. Dazu zählen beispielsweise N-Methylaminomethyl(meth)acrylat, N-Methylaminoethyl(meth)acrylat, N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Ebenfalls geeignet sind die Quarternierungsprodukte der vorstehenden Verbindungen mit C₁-C₈ Alkylchloriden, C₁-C₈-Dialkylsulfaten, C₁-C₁₆-Epoxiden oder Benzylchlorid.

Darüber hinaus sind als weitere Monomere (e) N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[2-(Diethylamino)ethyl]methacrylamid und Mischungen davon geeignet.

Ebenfalls geeignet sind die Quarternierungsprodukte der vorstehenden Verbindungen mit C₁-C₈ Alkylchlorid, C₁-C₈-Dialkylsulfat, C₁-C₁₆-Epoxiden oder Benzylchlorid.

Geeignete Monomere (e) sind weiterhin N-Vinylimidazole, Alkylvinylimidazole, insbesondere Methylvinylimidazole wie 1-Vinyl-2-methylimidazol, 3-Vinylimidazol-N-oxid, 2- und 4-Vinylpyridine, 2- und 4-Vinylpyridin-N-oxide sowie betainische Derivate und Quaternisierungsprodukte dieser Monomere.

Weiterhin geeignet als Monomer der Gruppe (e) ist Dialkyldiallylammoniumchlorid.

Die zuvor genannten Monomere (e) können einzeln oder in Form von beliebigen Mischungen eingesetzt werden.

Als Monomere (f) geeignet sind N-Vinylcarbonsäureamide der allgemeinen Formel (I) 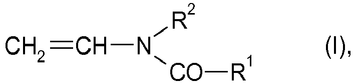 worin R¹ und R² unabhängig voneinander für H oder C₁- bis C₆-Alkyl stehen. Geeignete offenkettige N-Vinylamidverbindungen der Formel (I) sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid und Mischungen davon.

Weiterhin geeignet als Monomere (f) sind Ester α,β-ethylenisch ungesättigter Mono- und Dicarbonsäuren mit C₁-C₃₀-Alkanolen, C₂-C₃₀-Alkandiolen, Amide α,β-ethylenisch ungesättigter Monocarbonsäuren und deren N-Alkyl- und N,N-Dialkylderivate, Ester von Vinylalkohol und Allylalkohol mit C₁-C₃₀-Monocarbonsäuren, Vinylaromaten, Vinylhalogenide, Vinylidenhalogenide, C₂-C₈-Monoolefine und Mischungen davon.

Geeignete zusätzliche Monomere (f) sind z.B. Methyl(meth)acrylat, Methylethacrylat, Ethyl(meth)acrylat, Ethylethacrylat, n-Butyl(meth)acrylat, Isobutyl(meth)acrylat, tert.-Butyl(meth)acrylat, tert.-Butylethacrylat, n-Octyl(meth)acrylat, 1,1,3,3-Tetramethylbutyl(meth)acrylat, Ethylhexyl(meth)acrylat und Mischungen davon.

Geeignete zusätzliche Monomere (f) sind weiterhin (Meth)acrylamide und (Meth)acrylnitrile wie beispielsweise Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, tert.-Butyl(meth)acrylamid, n-Octyl(meth)acrylamid, 1,1,3,3-Tetramethylbutyl(meth)acrylamid, Ethylhexyl(meth)acrylamid, Acrylnitril und Methacrylnitril und Mischungen davon.

Als weitere Monomere (f) sind 2-Hydroxyethyl(meth)acrylat, 2-Hydroxyethylethacrylat, 2-Hydroxypropyl(meth)acrylat, 3-Hydroxypropyl(meth)acrylat, 3-Hydroxybutyl(meth)acrylat, 4-Hydroxybutyl(meth)acrylat, 6-Hydroxyhexyl(meth)acrylat etc. und Mischungen davon geeignet.

Geeignete Monomere (f) sind weiterhin N-Vinyllactame und deren Derivate, die z.B. einen oder mehrere C₁-C₆-Alkylsubstituenten, wie Methyl, Ethyl, n-Propyl, Isopropyl, n-Butyl, sec.-Butyl, tert.-Butyl etc. aufweisen können. Dazu zählen z.B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete zusätzliche Monomere (f) sind weiterhin Ethylen, Propylen, Isobutylen, Butadien, Styrol, α-Methylstyrol, Vinylchlorid, Vinylidenchlorid, Vinylfluorid, Vinylidenfluorid und Mischungen davon.

Die erfindungsgemäß eingesetzten wasserlöslichen amphoteren Copolymerisate für wässrige Anschlämmungen der Ausführungsform B sind beispielsweise erhältlich durch radikalische Polymerisation von
(b) 1 bis 99 Gew.-%, bevorzugt 5 bis 95 Gew.-%, insbesondere 10 bis 80 Gew.-%, bezogen auf das Gesamtgewicht der zur Polymerisation eingesetzten Monomere, wenigstens einem Monomer, das ausgewählt ist aus der Gruppe bestehend aus
   (b₁) monoethylenisch ungesättigten Sulfonsäuren, Phosphonsäuren, Phosphorsäureestern und Derivaten davon, und
   (b₂) monoethylenisch ungesättigten Mono- und Dicarbonsäuren, deren Salzen und Dicarbonsäureanhydriden,
   1 bis 99 Gew.-%, bevorzugt 5 bis 95 Gew.-%, insbesondere 10 bis 80 Gew.-%, bezogen auf das Gesamtgewicht der zur Polymerisation eingesetzten Monomere, wenigstens einem Monomer, das ausgewählt ist aus der Untergruppe (b₂),
(e) 1 bis 99 Gew.-%, bevorzugt 5 bis 95 Gew.-%, insbesondere 20 bis 90 Gew.-%, bezogen auf das Gesamtgewicht der zur Polymerisation eingesetzten Monomere, wenigstens einem ethylenisch ungesättigten Monomer, das eine kationische Gruppe und/oder eine durch Protonierung kationisch aufladbare Gruppe trägt,
(f) 0 bis 30 Gew.-%, bevorzugt 0,1 bis 25 Gew.-%, insbesondere 1 bis 15 Gew.-%, bezogen auf das Gesamtgewicht der zur Polymerisation eingesetzten Monomere, wenigstens einem von den Komponenten (b) und (e) verschiedenen monoethylenisch ungesättigten Monomer, und
(d) 0 bis 5 Gew.-%, bevorzugt 0,0001 bis 3 Gew.-%, bezogen auf das Gesamtgewicht der zur Polymerisation eingesetzten Monomeren, wenigstens einer Verbindung, die mindestens zwei ethylenisch ungesättigte Doppelbindungen im Molekül aufweist.

Beispielsweise sind solche wasserlöslichen amphoteren Copolymerisate für wässrige Anschlämmungen der Ausführungsform B bevorzugt, die erhältlich sind durch Copolymerisieren von
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(e) wenigstens einem ethylenisch ungesättigten Monomer, das ausgewählt ist aus der Gruppe der Ester von α,β-ethylenisch ungesättigten Mono- und Dicarbonsäuren mit C₂-C₁₂-Aminoalkoholen, die am Aminstickstoff C₁-C₈-monoalkyliert oderdialkyliert sein können, sowie die Quaternisierungsprodukte dieser Ester mit C₁-C₈-Alkylchloriden, C₁-C₈-Dialkylsulfaten, C₁-C₁₆-Epoxiden oder Benzylchlorid,
(f) gegebenenfalls wenigstens einem von den Komponenten (b) und (e) verschiedenen monoethylenisch ungesättigten Monomer, das ausgewählt ist aus der Gruppe der N-Vinylcarbonsäureamide der allgemeinen Formel (I) 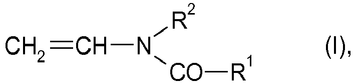 worin R¹ und R² unabhängig voneinander für H oder C₁- bis C₆-Alkyl stehen, (Meth)acrylamide und (Meth)acrylnitrile, und
(d) gegebenenfalls wenigstens eine Verbindung, die mindestens zwei ethylenisch ungesättigte Doppelbindungen im Molekül aufweist.

Besonders bevorzugt sind solche wasserlöslichen amphoteren Copolymerisate für wässrige Anschlämmungen der Ausführungsform B, die erhältlich sind durch Copolymerisieren von
(b) Acrylsäure, Methacrylsäure und/oder deren Alkali- oder Ammoniumsalzen,
(e) Dimethylaminoethyl(meth)acrylat Methochlorid,
(f) N-Vinylformamid, Acrylamid und/oder Acrylnitril.

Selbstverständlich sind auch Mischungen in jeder beliebigen Zusammensetzung der beiden Ausführungsformen A und B zur Herstellung der erfindungsgemäßen wässrigen Anschlämmungen von feinteiligen Füllstoffen möglich. Bevorzugt werden jedoch nur wasserlösliche amphotere Copolymerisate einer Ausführungsform eingesetzt.

Darüber hinaus sind auch Ausführungsformen von wasserlöslichen amphoteren Copolymerisaten möglich, die beliebige Mischungen der genannten Monomergruppen aus den beiden Ausführungsformen A und B enthalten.

Die Herstellung der wasserlöslichen amphoteren Copolymerisate, unabhängig davon, ob sie in wässrigen Anschlämmungen der Ausführungsform A oder B eingesetzt werden, erfolgt nach üblichen, dem Fachmann bekannten Verfahren. Geeignete Verfahren sind z. B. in der EP 0 251 182 A1, WO 94/13882 und EP 0 672 212 B1 beschrieben, worauf hier Bezug genommen wird. Weiterhin wird auf die Herstellung der in WO 04/087818 A1 und WO 05/012637 beschriebenen wasserlöslichen amphoteren Copolymerisate Bezug genommen.

Die Herstellung der wasserlöslichen amphoteren Copolymerisate kann durch Lösungs-, Fällungs-, Suspensions- oder Emulsionspolymerisation erfolgen. Bevorzugt ist die Lösungspolymerisation in wässrigen Medien. Geeignete wässrige Medien sind Wasser und Gemische aus Wasser und mindestens einem wassermischbaren Lösungsmittel, z. B. einem Alkohol, wie Methanol, Ethanol, n-Propanol, etc.

Die Polymerisationstemperaturen liegen vorzugsweise in einem Bereich von etwa 30 bis 200 °C, besonders bevorzugt 40 bis 110 °C. Die Polymerisation erfolgt üblicherweise unter atmosphärischem Druck, sie kann jedoch auch unter vermindertem oder erhöhtem Druck ablaufen. Ein geeigneter Druckbereich liegt zwischen 0.1 und 5 bar.

Die Säuregruppen-haltigen Monomere (b) werden vorzugsweise in der Salzform eingesetzt. Der pH-Wert wird zur Copolymerisation vorzugsweise auf einen Wert im Bereich von 6 bis 9 eingestellt. Durch Einsatz eines üblichen Puffers oder durch Messung des pH-Werts und entsprechende Zugabe von Säure oder Base kann der pH-Wert während der Polymerisation konstant gehalten werden.

Zur Herstellung der Polymerisate können die Monomeren mit Hilfe von Radikale bildenden Initiatoren polymerisiert werden.

Als Initiatoren für die radikalische Polymerisation können die hierfür üblichen Peroxo- und/oder Azo-Verbindungen eingesetzt werden, beispielsweise Alkali- oder Ammoniumperoxidisulfate, Diacetylperoxid, Dibenzoylperoxid, Succinylperoxid, Di-tert.-butylperoxid, tert.-Butylperbenzoat, tert.-Butylperpivalat, tert.-Butylperoxy-2-ethylhexanoat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid, Azo-bis-isobutyronitril, Azo-bis-(2-amidonopropan)dihydrochlorid oder 2,2'-Azo-bis-(2-methyl-butyronitril). Geeignet sind auch Initiatormischungen oder Redox-Initiator-Systeme, wie z. B. Ascorbinsäure/Eisen(II)sulfat/Natriumperoxodisulfat, tert.-Butylhydroperoxid/Natriumdisulfit, tert.-Butylhydroperoxid/Natriumhydroxymethansulfinat, H₂O₂/CuI.

Zur Einstellung des Molekulargewichts kann die Polymerisation in Gegenwart wenigstens eines Reglers erfolgen. Als Regler können die üblichen, dem Fachmann bekannten Verbindungen, wie z. B. Schwefelverbindungen, z. B. Mercaptoethanol, 2-Ethylhexylthioglycolat, Thioglycolsäure, Natriumhypophosphit, Ameisensäure oder Dodecylmercaptan sowie Tribromchlormethan oder andere Verbindungen, die regelnd auf das Molekulargewicht der erhaltenen Polymerisate wirken, eingesetzt werden.

Die Molmasse der wasserlöslichen amphoteren Copolymerisate beträgt beispielsweise mindestens 10 000, vorzugsweise mindestens 100 000 Dalton und insbesondere mindestens 500 000 Dalton. Die Molmassen der Copolymerisate betragen dann z.B. 10 000 bis 10 Millionen, vorzugsweise 100 000 bis 5 Millionen (z.B. bestimmt durch Lichtstreuung). Dieser Molmassenbereich entspricht beispielsweise K-Werten von 5 bis 300, vorzugsweise 10 bis 250 (bestimmt nach H. Fikentscher in 5%iger wässriger Kochsalzlösung bei 25 °C und einer Polymerkonzentration von 0,1 Gew.-%).

Die wasserlöslichen amphoteren Copolymerisate können eine anionische oder eine kationische Überschußladung tragen oder auch elektrisch neutral sein, wenn gleich viele anionische und kationische Gruppen im Copolymerisat vorliegen. In Abhängigkeit vom Ladungszustand der wasserlöslichen amphoteren Copolymerisate sind die damit hergestellten wässrigen Anschlämmungen der Füllstoffe anionisch, kationisch oder elektrisch neutral, wenn die wasserlöslichen amphoteren Copolymerisate die gleiche Menge an kationischer and anionischer Ladung aufweisen.

Vorzugsweise werden solche wasserlöslichen amphoteren Copolymerisate eingesetzt, die bei pH 7 sowohl im anionischen als auch im kationischen Bereich eine Ladungsdichte von vorzugsweise höchstens 1 meq/g haben.

Die wasserlöslichen amphoteren Copolymerisate werden erfindungsgemäß zur Behandlung von feinteiligen Füllstoffen eingesetzt. Als Füllstoffe kommen alle üblicherweise in der Papierindustrie einsetzbaren Pigmente aus anorganischem Material in Betracht, z.B. Calciumcarbonat, das in Form von gemahlenen (GCC) Kalk, Kreide, Marmor oder präzipitiertem Calciumcarbonat (PCC) eingesetzt werden kann, Talkum, Kaolin, Bentonit, Satinweiß, Calciumsulfat, Bariumsulfat und Titandioxid. Man kann auch Mischungen aus zwei oder mehreren Pigmenten einsetzen. Der mittlere Teilchendurchmesser liegt beispielsweise im Bereich von 0,5 bis 30 µm, vorzugsweise zwischen 1 und 10 µm.

Weiterhin enthalten die erfindungsgemäßen wässrigen Anschlämmungen mindestens eine gequollene Stärke, die ebenfalls zur Behandlung der feinteiligen Füllstoffe eingesetzt wird. Diese gequollene Stärke ist unabhängig vom verwendeten Stärketyp von der üblicherweise in der Papierindustrie eingesetzten, vollständig aufgeschlossenen Stärke klar zu unterscheiden. Bei der üblicherweise eingesetzten, vollständig aufgeschlossenen Stärke sind die Stärkekörner vollständig aufgeplatzt, wobei die Stärke in molekulardisperser Form vorliegt. Im Gegensatz dazu ist die Stärke in den erfindungsgemäßen wässrigen Anschlämmungen gequollen, d.h. bei den Stärkepartikeln handelt es sich um gequollene, aber im Wesentlichen nicht-fragmentierte Stärkepartikel. Die Stärke ist gequollen, hat jedoch ihre granuläre Struktur beibehalten. Derart gequollene Stärkepartikel haben in Abhängigkeit vom eingesetzten Stärketyp in der Regel eine Größe im Bereich von 5 bis 90 µm, bevorzugt 30 bis 70 µm.

Gequollene Stärke wird durch Behandeln einer ungequollenen Stärke enthaltenen wässrigen Zusammensetzung mit heißem Wasser erhalten. Diese Behandlung erfolgt unterhalb der für den jeweiligen Stärketypen relevanten Gelatinierungstemperatur, so dass sichergestellt ist, dass die Stärkepartikel lediglich quellen und nicht aufplatzen. Die Temperatur des zugesetzten heißen Wassers sowie die Verweilzeit der Stärkekörner in der heißen Umgebung ist abhängig vom eingesetzten Stärketyp, in der Regel hat das heiße Wasser jedoch Temperaturen im Bereich von 50 bis 85 °C, bevorzugt im Bereich von 60 bis 80 °C und insbesondere bevorzugt im Bereich von 70 bis 75 °C.

Der Quellvorgang wird nach einer bestimmten Zeit, die abhängig vom eingesetzten Stärketyp und der Temperatur des heißen Wassers ermittelt werden muss, abgebrochen, bevorzugt in dem kaltes Wasser der warmen wässrigen Stärkemischung zugesetzt wird.

Das Quellen von Stärke ist in WO 03/087472 A1 beschrieben, auf die an dieser Stelle ausdrücklich Bezug genommen wird.

Als Stärketypen kommen alle in der Papierindustrie gängigen Stärken in Betracht, die sowohl anionisch, kationisch als auch amphoter sein können. Die mittleren Molmassen M_{w} der Stärken liegen beispielsweise im Bereich von 50 000 bis 150 000 000, bevorzugt im Bereich von 100 000 bis 100 000 000, besonders bevorzugt im Bereich von 200 000 bis 50 000 000. Die mittleren Molekurlagewichte M_{w} der Stärken können durch dem Fachmann bekannte Methoden ermittelt werden, z. B. mittels Gelpermeationschromatographie unter Verwendung eines Vielwinkellichtstreudetektors.

Als Stärketypen kommen native Stärken wie Kartoffel-, Weizen-, Mais-, Reis- oder Tapiokastärke in Betracht, wobei Kartoffelstärke bevorzugt ist. Ebenso können chemisch modifizierte Stärken wie Hydroxyethyl- oder Hydroxypropylstärken eingesetzt werden oder auch Stärken, die anionische Gruppen enthalten wie z. B. Phosphatstärke, oder auch kationisierte Stärken, die quaternäre Ammoniumgruppen enthalten, wobei ein Substitutionsgrad DS = 0,01 bis 0,2 bevorzugt ist. Der Substitutionsgrad DS gibt dabei die Zahl der kationischen Gruppen an, die durchschnittlich pro Glucoseeinheit in der Stärke enthalten sind. Besonders bevorzugt sind amphotere Stärken, die sowohl quaternäre Ammoniumgruppen als auch anionische Gruppen wie Carboxylat und/oder Phosphatgruppen enthalten und die gegebenenfalls auch chemisch modifiziert sein können, z. B. hydroxylalkyliert oder alkylverestert. Die Stärken können einzeln aber auch in beliebigen Mischungen untereinander eingesetzt werden.

Wie zuvor beschrieben ist auch ein Verfahren zur Herstellung der wässrigen Anschlämmungen Gegenstand der vorliegenden Erfindung. Dabei werden wässrigen Anschlämmungen erhalten, in dem man einer wässrigen Anschlämmung mindestens eines feinteiligen Füllstoffes mit 0,01 bis 5 Gew.-%, bezogen auf den Füllstoff, mindestens eines wasserlösliches amphoteres Copolymerisats und mit 0,1 bis 10 Gew.-%, bezogen auf den Füllstoff, mindestens einer gequollenen Stärke behandelt.

Die Behandlung des feinteiligen Füllstoffs mit dem wasserlöslichen Copolymerisat und der gequollenen Stärke kann auf unterschiedliche Weise erfolgen. Prinzipiell ist jede denkbare Zusammenführung der drei Komponenten Stärke (ungequollen oder gequollen), wasserlösliches amphoteres Copolymerisat und Füllstoff möglich. Dabei ist es möglich, die Stärke sowohl im ungequollenen Zustand einem oder beiden der anderen Komponenten - wasserlösliches amphoteres Copolymerisat und/oder Füllstoff - beizumischen und das Quellen dann in Gegenwart dieses einen oder beiden anderen Komponenten durchzuführen. Ebenso ist es auch möglich, das Quellen der Stärke unabhängig von den anderen Komponenten durchzuführen und anschließend die gequollene Stärke einem oder beiden der anderen Komponenten - wasserlösliches amphoteres Copolymerisat und Füllstoff - beizumischen.

Beispielsweise kann die Behandlung der wässrigen Anschlämmung mindestens eines feinteiligen Füllstoffs mit mindestens einem wasserlöslichen amphoteren Copolymerisat und mindestens einer gequollener Stärke folgendermaßen erfolgen:
(A) Herstellung einer wässrigen Anschlämmung enthaltend mindestens eine ungequollene Stärke und mindestens ein wasserlösliches amphoteres Copolymerisat, anschließend Quellen der Stärke, Zugabe einer wässrigen Anschlämmung mindestens eines feinteiligen Füllstoffs zu dieser Stärke-Copolymerisat-Zusammensetzung,
(B) Herstellung einer wässrigen Anschlämmung enthaltend mindestens einen feinteiligen Füllstoff und mindestens ein wasserlösliches amphoteres Copolymerisat, Herstellung einer wässrigen Anschlämmung mindestens einer ungequollenen Stärke, anschließend Quellen der Stärke, Mischen der beiden wässrigen Anschlämmungen, oder
(C) Herstellung einer wässrigen Anschlämmung enthaltend mindestens eine ungequollene Stärke, Quellen der Stärke, Zugabe einer wässrigen Anschlämmung mindestens eines feinteiligen Füllstoffs, anschließend Zugabe einer wässrigen Lösung mindestens eines wasserlöslichen amphoteren Copolymerisats.

Zunächst erfolgt in allen Varianten die Herstellung einer wässrigen Anschlämmung von feinteiligen Füllstoffen. Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z. B. Polyacrylsäuren mit einer mittleren Molmasse M_{w} von beispielsweise 1 000 bis 40 000 Dalton. Falls man ein anionisches Dispergiermittel verwendet, so setzt man davon beispielsweise 0,01 bis 0,5 Gew.-% vorzugsweise 0,2 bis 0,3 Gew.-% zur Herstellung wässriger Füllstoffanschlämmungen ein. Die in Gegenwart von anionischen Dispergiermitteln in Wasser dispergierten feinteiligen Füllstoffe sind anionisch. Die wässrigen Anschlämmungen enthalten beispielsweise 10 bis 30 Gew.-%, meistens 15 - 25 Gew.-% mindestens eines Füllstoffs.

In der ersten Variante (A) wird zunächst eine wässrige Anschlämmung mindestens einer ungequollenen Stärke bereitgestellt, die beispielsweise einen Stärkegehalt von 5 bis 50 Gew.-%, bevorzugt von 10 bis 35 Gew.-%, besonders bevorzugt von 15 bis 25 Gew.-% aufweist. Zu dieser Stärkeslurry wird eine wässrige Lösung mindestens eines wasserlöslichen amphoteren Copolymerisats zugegeben. Die Beimischung erfolgt bevorzugt bei Raumtemperatur. Die Dosiermenge des mindestens einem wasserlöslichen amphoteren Copolymerisat beträgt beispielsweise 0,1 bis 30 Gew.-%, bevorzugt 0,5 bis 20 Gew.-% und besonders bevorzugt 1,0 bis 15 Gew.-%, jeweils bezogen auf die Stärke. Die wässrige Anschlämmung enthaltend mindestens eine ungequollene Stärke und mindestens ein wasserlösliches amphoteres Copolymerisat wird anschließend mit heißem Wasser gemischt, so dass die Temperatur der gesamten Mischung erhöht wird und der Quellvorgang der Stärke einsetzt. Wie zuvor beschrieben, erfolgt das Quellen der Stärke bei Temperaturen unterhalb der Gelatinierungstemperatur des jeweiligen Stärketypen, so dass sichergestellt ist, dass die Stärkepartikel lediglich quellen und nicht aufplatzen. Der Quellvorgang wird nach einer bestimmten Zeit, die abhängig vom eingesetzten Stärketyp und der Temperatur des heißen Wassers ist, abgebrochen, bevorzugt, in dem kaltes Wasser der warmen wässrigen Anschlämmung enthaltend mindestens eine gequollene Stärke und mindestens ein wasserlösliches amphoteres Copolymerisat zugesetzt wird. Zu dieser wässrigen Stärke-Copolymerisat-Zusammensetzung wird anschließend eine wässrige Anschlämmung mindestens eines feinteiligen Füllstoffs zugegeben.

Alternativ kann in dieser Variante (A) der Abbruch des Quellvorgangs auch herbeigeführt werden, in dem die wässrige Anschlämmung mindestens eines feinteiligen Füllstoffs direkt zu der warmen wässrigen Anschlämmung enthaltend mindestens eine gequollene Stärke und mindestens ein wasserlösliches amphoteres Copolymerisat zugesetzt wird. Dies setzt voraus, dass die wässrige Anschlämmung mindestens eines feinteiligen Füllstoffs eine deutlich geringere Temperatur als die warme wässrige Stärke-Copolymerisat-Zusammensetzung aufweist.

Unabhängig von der Abbruchmöglichkeit des Quellvorgangs beträgt die Dosiermenge der Stärke-Copolymerisat-Zusammensetzung bezogen auf den Füllstoff beispielsweise 0,1 bis 15 Gew.-%, bevorzugt 0,5 bis 7,5 Gew.-%.

Gemäß der möglichen Variante (B) wird zunächst eine wässrige Anschlämmung enthaltend mindestens einen feinteiligen Füllstoff und mindestens ein wasserlösliches amphoteres Copolymerisat hergestellt. Die Dosiermenge des wasserlöslichen amphoteren Copolymerisats beträgt beispielsweise 0,01 bis 5 Gew.-%, bevorzugt, 0,05 bis 2,5 Gew.-%, besonders bevorzugt 0,05 bis 1 Gew.-%, bezogen auf den Füllstoff. Unabhängig davon wird eine wässrige Anschlämmung mindestens einer ungequollenen Stärke hergestellt. Diese wird wie oben beschrieben einem Quellvorgang unterzogen, in dem heißes Wasser der wässrigen Anschlämmung beigemischt wird. Der Quellvorgang wird abgebrochen, in dem der warmen wässrigen Stärkeslurry entweder kaltes Wasser zugesetzt wird oder die warme wässrige Stärkeslurry direkt der wässrigen Anschlämmung enthaltend mindestens einen feinteiligen Füllstoff und mindestens ein wasserlösliches amphoteres Copolymerisat beigemischt wird, wenn diese eine deutlich geringere Temperatur als die warme wässrige Stärkeslurry aufweist. Die Dosiermenge der Stärke beträgt beispielsweise 0,1 bis 10 Gew.-%, bevorzugt 0,5 bis 5 Gew.-%, bezogen auf den Füllstoff.

In der dritten Variante (C) werden wässrige Anschlämmungen bzw. Lösungen von allen Komponenten - Stärke, wasserlösliches amphoteres Copolymerisat und Füllstoff - getrennt voneinander hergestellt. Das Quellen der Stärke erfolgt in Abwesenheit von wasserlöslichem Copolymerisat und Füllstoff. Anschließend werden die wässrigen Anschlämmungen bzw. Lösungen aller Komponenten in beliebiger Reihenfolge zusammen gemischt, bevorzugt ist jedoch zunächst die Zugabe der wässrigen Anschlämmung mindestens eines feinteiligen Füllstoffs zu der wässrigen Anschlämmung der mindestens einen gequollenen Stärke und anschließend die Zugabe der wässrigen Lösung des mindestens einen wasserlöslichen amphoteren Copolymerisats zu dieser Mischung. Die Dosiermenge der gequollenen Stärke beträgt beispielsweise 0,1 bis 10 Gew.-%, bevorzugt 0,5 bis 5 Gew.-%, bezogen auf den Füllstoff. Die Dosiermenge des wasserlöslichen amphoteren Copolymerisats beträgt beispielsweise 0,01 bis 5 Gew.-%, bevorzugt 0,05 bis 2,5 Gew.-% und besonders bevorzugt 0,05 bis 1 Gew.-%, bezogen auf den Füllstoff.

Unabhängig von der Reihenfolge der Zugabe der wässrigen Anschlämmungen bzw. Lösungen der Komponenten - Stärke, wasserlösliches amphoteres Copolymerisat und Füllstoff - kann das Behandeln der wässrigen Anschlämmung von feinteiligen Füllstoffen mit den wasserlöslichen amphoteren Copolymerisaten und der gequollenen Stärke kontinuierlich oder diskontinuierlich durchgeführt werden. Beim Zusammenbringen von wässrigen Anschlämmungen feinteiliger Füllstoffe, wässrigen Anschlämmungen von gequollener Stärke und wässrigen Lösungen wasserlöslicher amphoterer Copolymerisaten werden die Füllstoffteilchen zumindest teilweise mit den wasserlöslichen amphoteren Copolymerisaten und der gequollenen Stärke überzogen bzw. imprägniert.

Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°C bis 60°C, vorzugsweise 10 bis 50°C erfolgen. Meistens mischt man die Komponenten bei der jeweiligen Raumtemperatur bis zu einer Temperatur von 40°C. Der pH-Wert der mit wasserlöslichen amphoteren Copolymerisaten und gequollener Stärke behandelten wässrigen Anschlämmungen von feinteiligen Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Die wasserlöslichen amphoteren Copolymerisate weisen eine größere Anzahl an die Polymerkette gebundene, ionisch dissoziierbarer/dissoziierter Gruppen entgegengesetzter Ladbarkeit/Ladung auf. Beim Inkontaktbringen mit wässrigen Anschlämmungen von feinteiligen Füllstoffen können Coulomb-Wechselwirkungen auftreten. So erfolgt bei dem Inkontaktbringen im Allgemeinen eine zumindest teilweise Belegung der Oberfläche der Polymerteilchen. Dies lässt sich beispielsweise durch Transmissionselektronenmikroskopie (TEM) nachweisen. Die Oberflächenladung kann zusätzlich durch Zeta-Potential-Messungen gemessen werden, die belegen, das die Ladung außen sitzt. Die elektrophoretische Mobilität bzw. das Zetapotential lassen sich laseroptisch bestimmen. Als Messinstrument dient z. B. ein Zetasizer 3000 HS der Firma Malvern Instruments Ltd..

Ein weiterer Gegenstand der Erfindung ist die Verwendung der oben beschriebenen wässrigen Anschlämmungen als Zusatz zum Papierstoff bei der Herstellung von füllstoffhaltigem Papier, füllstoffhaltigem Karton oder füllstoffhaltiger Pappe durch Entwässern des Papierstoffs.

Gegenstand der Erfindung sind auch Papiere, die unter Verwendung der erfindungsgemäßen wässrigen Anschlämmungen von feinteiligen Füllstoffen hergestellt werden.

Im Detail handelt es sich hierbei um füllstoffhaltige Papiere wie z. B. holzfrei ungestrichenes Druck- Schreib- oder Kopierpapier sowie holzhaltig ungestrichene Papiere wie z. B. aufgebessertes Zeitungsdruckpapier oder SC-Papiere für den Offset- bzw. Tiefdruckbereich. Durch die Behandlung des dem Papier zugesetzten Füllstoffes mit gequollener Stärke in Kombination mit einem wasserlöslichen amphoteren Copolymerisat kann der Füllstoffgehalt des Papiers bei nahezu unveränderten Festigkeitseigenschaften deutlich erhöht werden. Die unter Verwendung der erfindungsgemäßen wässrigen Anschlämmungen erhaltenen füllstoffhaltigen Papiere, Kartons und Pappen weisen Festigkeitseigenschaften auf, die mit denen herkömmlicher Papiere mit niedrigem Feststoffgehalt vergleichbar sind.

Die nach dem oben beschriebenen Verfahren vorbehandelten Füllstoffe werden dem Faserstoff beigemischt, um so den Gesamtpapierstoff zu bilden. Neben den behandelten Füllstoffen und Faserstoffen kann der Gesamtstoff noch andere konventionelle Papieradditive enthalten. Dazu gehören beispielsweise Leimungsmittel wie Alkylketendimere (AKD), Alkenylbernsteinsäureanhydride (ASA), Harzleim, Nassfestmittel, kationische oder anionische Retentionsmittel auf der Basis synthetischer Polymere. Als Retentionsmittel kommen beispielsweise anionische Mikropartikel (kolloidale Kieselsäure, Bentonit), anionische Polyacrylamide, kationische Polyacrylamide, kationische Stärke, kationisches Polyethylenimin oder kationisches Polyvinylamin in Frage. Darüber hinaus sind beliebige Kombinationen davon denkbar, wie beispielsweise duale Systeme, die aus einem kationischen Polymer mit einem anionischen Mikropartikel oder einem anionischen Polymer mit einem kationischen Mikropartikel bestehen.

Die Erfindung wird anhand der folgenden, nicht einschränkenden Beispiele näher erläutert.

Die Prozentangaben in den Beispielen bedeuten Gewichtsprozent" sofern aus dem Zusammenhang nichts anderes hervorgeht.

In den Beispielen werden folgende amphoteren Copolymerisate eingesetzt:
Copolymerisat 1: wasserlösliches amphoteres Copolymerisat mit einem Molekulargewicht M_{w} von ca. 500 000 g/mol, entsprechend Beispiel 1 aus WO 2004/087818; mit Gehalt an 40 Mol-% Vinylformamideinheiten, 30 Mol-% Acrylsäureeinheiten und 30 Mol-% Vinylamin- und Amideinheiten

### Beispiel 1

Kationische Wachsmaisstärke mit einem Substitutionsgrad von 0,035 wurde mit Wasser bei 25 °C zu einer 20 Gew.-%igen Slurry aufgeschlämmt. Zu 100 ml dieser Anschlämmung wurden 20 g einer 12 Gew.-%igen wässrigen Lösung des amphoteren Copolymerisaten 1 zugegeben. Die Mischung wurde anschließend mit 400 ml heißem Wasser (75 °C) verdünnt und für 90 Sekunden leicht umgerührt. Dann entnahm man 25 ml der verdünnten Slurry und legte diese in einem Becherglas vor. Anschließend gab man 150 g einer 20 Gew.-%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

### Beispiel 2

In einem Becherglas wurde 1 g einer 12 Gew.-%igen wässrigen Lösung des amphoteren Copolymerisaten 1 vorgelegt und anschließend mit 30 g Wasser verdünnt. Anschließend gab man 150 g einer 20 Gew.-%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Nach ca. 60 Sekunden Rührzeit wurden 25 ml einer 4 Gew.-%igen Stärkeslurry (hergestellt aus einer kationischen Wachsmaissärke mit einem Substitutionsgrad von 0,035, zunächst als 20 Gew.-%ige Anschlämmung mit heißem Wasser (75 °C) auf 4 Gew.-% Feststoffgehalt verdünnt und für 90 Sekunden gequollen) zugegeben. Während der Zugabe der Stärkeslurry wurde die Mischung mit Hilfe des Heiltof-Rührers bei 500 UpM gerührt. Der pH-Wert der Mischung wurde anschließend auf 8,5 eingestellt.

### Beispiel 3

Kationische Wachsmaisstärke mit einem Substitutionsgrad von 0,035 wurde mit Wasser bei 25 °C zu einer 20 Gew.-%igen Slurry aufgeschlämmt. 100 ml dieser Stärkeslurry wurden anschließend mit 400 ml heißem Wasser (75 °C) verdünnt und für 90 Sekunden leicht umgerührt. Dann entnahm man 25 ml der verdünnten Slurry und legt diese in einem Becherglas vor. Anschließend gab man 150 g einer 20 Gew.-%igen Aufschlämmung von präzipitiertem Calciumcarbonat (PCC) in Wasser zu. Zu dieser vorbehandelten Füllstoffslurry wurden anschließend 1 g einer 12 Gew.-%igen wässrigen Lösung des amphoteren Copolymerisaten 1 zugegeben. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt

### Vergleichsbeispiel 1 (Vergleich nach WO 04/087818, Beispiel 1)

In einem Becherglas wurden 1 g einer 12 Gew.-%igen wässrigen Lösung des amphoteren Copolymerisaten 1 vorgelegt und anschließend mit 30 g Wasser verdünnt. Anschließend gab man 150 g einer 20 Gew.-%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Der pH-Wert der Mischung wird anschließend auf 8,5 eingestellt.

### Vergleichsbeispiel 2

Kationische Wachsmaisstärke mit einem Substitutionsgrad von 0,035 wurde mit Wasser bei 25 °C zu einer 20 Gew.-%igen Slurry aufgeschlämmt. Das Gesamtvolumen der Slurry betrug 100 ml. Diese Mischung wurde anschließend mit 400 ml heißem Wasser (75 °C) verdünnt und für 90 Sekunden leicht umgerührt. Dann entnahm man 25 ml der verdünnten Stärkelurry und legte diese in einem Becherglas vor. Anschließend gab man 150 g einer 20 Gew.-%igen Aufschlämmung von präzipitiertem Calciumcarbonat (PCC) in Wasser zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt.

### Vergleichsbeispiel 3 (Vergleich nach WO 03/087472)

Kationische Wachsmaisstärke mit einem Substitutionsgrad von 0,035 wurde mit Wasser bei 25 °C zu einer 20 Gew.-%igen Slurry aufgeschlämmt. Anschließend wurden 1,8 g einer 50 Gew.-%igen Dispersion eines anionischen Latex zugemischt (Acronal^{®} S504, BASF Aktiengesellschaft). Diese Mischung wurde anschließend mit 400 ml heißem Wasser (75 °C) verdünnt und für 90 Sekunden leicht umgerührt. Dann entnahm man 25 ml der verdünnten Slurry und legt diese in einem Becherglas vor. Anschließend gab man 150 g einer 20 Gew.-%igen wässrigen Aufschlämmung von präzipitiertem Calciumcarbonat (PCC) unter leichtem Rühren zu. Während der Zugabe der PCC-Slurry und danach wurde die Mischung mit Hilfe eines Heiltof-Rührers bei 1000 UpM gerührt. Der pH-Wert der Mischung wurde anschließend auf 8,5 eingestellt.

### Herstellung von füllstoffhaltigem Papier

### Beispiele 4 - 12

### Vergleichsbeispiele 4 - 15

Eine Mischung aus gebleichtem Birkensulfat und gebleichtem Kiefernsulfit wurde im Verhältnis von 70/30 bei einer Feststoffkonzentration von 4 % im Laborpulper stippenfrei aufgeschlagen, bis ein Mahlgrad von 30 - 35 erreicht wurde. Dem aufgeschlagenen Stoff wurde anschließend ein optischer Aufheller (Blankophor^{®} PSG, Bayer AG) sowie eine kationische Stärke (HiCat^{®} 5163 A) zugegeben. Der Aufschluss der kationischen Stärke erfolgte als 10 Gew.-%ige Stärkeslurry in einem Jet-Kocher bei 130 °C und 1 Minute Verweilzeit. Die Dosiermenge des optischen Aufhellers betrug 0,5 Gew.-% Handelsware, bezogen auf den Trockengehalt der Papierstoffsuspension. Die Dosiermenge der kationischen Stärke betrug 0,5 Gew.-% Stärke, bezogen auf den Trockengehalt der Papierstoffsuspension. Der pH-Wert des Stoffs lag dabei im Bereich zwischen 7 und 8. Der gemahlene Stoff wurde anschließend durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosierte jeweils in diese Pulpe die gemäß den Beispielen behandelten Slurries sowie ein kationisches Polyacrylamid als Retentionsmittel (Polymin^{®} KE 2020, BASF Aktiengesellschaft). Die Dosiermenge des Retentionsmittels betrug in allen Fällen jeweils 0,01 Gew.-% Polymer, bezogen auf den Trockengehalt der Papierstoffsuspension.

Anschließend wurden Blätter mit den oben beschriebenen vorbehandelten Füllstoffen gebildet (Beispiele 4 - 12 und Vergleichsbeispiele 4 - 12). Die dazu eingesetzte Füllstoffmenge wurde so angepasst, dass die Füllstoffgehalte ca. 20 %, 30 % bzw. 40 % betrugen. Im Falle der vorbehandelten Füllstoffe ist die eingesetzte Slurrymenge, die eingesetzt werden muss, um einen bestimmten Zielwert zu erreichen, stets geringer als im Falle der unbehandelten Füllstoffe.

Zu jedem der vorbehandelten Füllstofftypen wurden außerdem Vergleichsbeispiele mit unbehandeltem Füllstoff durchgeführt (Vergleichsbeispiele 13 - 15). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 70 g/m² gefertigt und anschließend 7 Minuten bei 90 °C getrocknet.

### Prüfung der Papierblätter

Nach einer Lagerzeit im Klimaraum bei konstant 23 °C und 50 % Luftfeuchtigkeit für 12 Stunden wurden die Trockenreißlänge der Blätter nach DIN 54540, die innere Festigkeit nach DIN 54516 und die Biegesteifigkeit nach DIN 53121 ermittelt. Die Ergebnisse sind in Tabelle 1 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

**Tabelle 1**

| Beispiel bzw. Vergleichsbeispiel (VB) | Slurry nach Beispiel bzw. Vergleichsbeispiel (VB) | Füllstoffgehalt [%] | Trockenreislänge [m] | Innere Festigkeit [N] | BiegeSteifigkeit [mN] |
|---|---|---|---|---|---|
| 4 | 1 | 19,5 | 5698 | 389 | 81,4 |
| 5 | 1 | 30,3 | 4678 | 301 | 66,2 |
| 6 | 1 | 39,5 | 4187 | 245 | 51,7 |
| 7 | 2 | 18,9 | 5659 | 367 | 84,9 |
| 8 | 2 | 29,7 | 4578 | 312 | 65,3 |
| 9 | 2 | 38,9 | 4265 | 231 | 53,6 |
| 10 | 3 | 20,3 | 5563 | 372 | 78,9 |
| 11 | 3 | 29,1 | 4576 | 312 | 67,2 |
| 12 | 3 | 38,8 | 4137 | 251 | 50,1 |
| 4 (VB) | 1 (VB) | 20,2 | 4675 | 257 | 78,4 |
| 5 (VB) | 1 (VB) | 29,5 | 3701 | 153 | 43,9 |
| 6 (VB) | 1 (VB) | 40,3 | 2815 | 101 | 30,5 |
| 7 (VB) | 2 (VB) | 20,3 | 4945 | 295 | 74,3 |
| 8 (VB) | 2 (VB) | 29,6 | 4025 | 214 | 44,5 |
| 9 (VB) | 2 (VB) | 39,7 | 3112 | 122 | 31,2 |
| 10 (VB) | 3 (VB) | 21,1 | 5189 | 305 | 76,1 |
| 11 (VB) | 3 (VB) | 30,9 | 4212 | 234 | 46,9 |
| 12 (VB) | 3 VB) | 39,4 | 3218 | 167 | 33,5 |
| 13 (VB) | PCC ohne Vorbehandlung | 20,4 | 4389 | 226 | 73,1 |
| 14 (VB) | PCC ohne Vorbehandlung | 30,5 | 3224 | 132 | 41,8 |
| 15 (VB) | PCC ohne Vorbehandlung | 39,4 | 2298 | 84 | 28,4 |

## Patentansprüche

1. Wässrige Anschlämmung von feinteiligen Füllstoffen, die zumindest teilweise mit einer Zusammensetzung aus mindestens einem wasserlöslichen amphoteren Copolymerisat und mindestens einer gequollenen Stärke überzogen sind.

2. Wässrige Anschlämmungen nach Anspruch 1, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomergemischs von
(a) wenigstens einem N-Vinylcarbonsäureamid der allgemeinen Formel 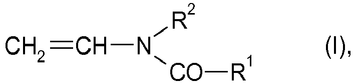 worin R¹ und R² unabhängig voneinander für H oder C₁- bis C₆-Alkyl stehen,
(b) wenigstens einem Monomer, das ausgewählt ist aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
mit der Maßgabe, dass das Monomerengemisch wenigstens ein Monomer (b) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (a).

3. Wässrige Anschlämmung nach Anspruch 1 oder 2, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomerengemischs von
(a) wenigstens einem N-Vinylcarbonsäureamid der allgemeinen Formel 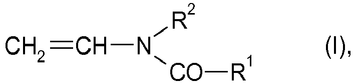 worin R¹ und R² unabhängig voneinander für H oder C₁- bis C₆-Alkyl stehen,
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
und anschließende teilweise oder vollständige Hydrolyse der Gruppen -CO-R¹ aus den in das Copolymerisat einpolymerisierten Monomeren (a).

4. Wässrige Anschlämmung nach einem der vorstehenden Ansprüche, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomerengemischs von
(a) N-Vinylformamid,
(b) Acrylsäure, Methacrylsäure und/oder deren Allkalimetall- oder Ammoniumsalzen, und
(c) gegebenenfalls anderen monoethylenisch ungesättigten Monomeren,
und anschließende teilweise oder vollständige Hydrolyse der in den Copolymerisaten enthaltenen Vinylformamideinheiten.

5. Wässrige Anschlämmung nach einem der vorstehenden Ansprüche, **dadurch gekennzeichnet, dass** die Hydrolyse der in den Copolymerisaten enthaltenen Vinylformamideinheiten durch Einwirkung von Säuren, Basen oder Enzymen erfolgt.

6. Wässrige Anschlämmung nach einem der vorstehenden Ansprüche, **dadurch gekennzeichnet, dass** der Hydrolysegrad der einpolymerisierten Vinylcarbonsäureamidgruppen 0,1 bis 100 Mol-% beträgt.

7. Wässrige Anschlämmungen nach einem der vorstehenden Ansprüche, **dadurch gekennzeichnet, dass** die hydrolysierte Copolymerisate
(i) 1 bis 98 Mol-%, vorzugsweise 1 bis 75 Mol-% Vinylcarbonsäureamideinheiten,
(ii) 1 bis 98 Mol-%, vorzugsweise 1 bis 55 Mol-% Einheiten von monoethylenisch ungesättigten Sulfonsäuren, Phosphonsäuren, Phosphorsäureestern, Derivaten davon, oder Einheiten von monoethylenisch ungesättigten Mono- und Dicarbonsäuren, deren Salzen und Dicarbonsäureanhydriden, bevorzugt 1 bis 98 Mol-%, vorzugsweise 1 bis 55 Mol-% Einheiten mindestens einer monoethylenisch ungesättigten Carbonsäure mit 3 bis 8 C-Atomen,
(iii) 1 bis 98 Mol-%, vorzugsweise 1 bis 55 Mol-% Vinylamineinheiten der Formel (II) und/oder Amidineinheiten der Formel (III) und/oder (IV), 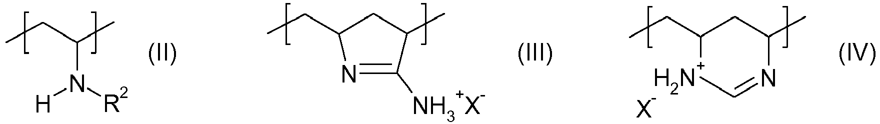 wobei in den Amidineinheiten (III) und (IV) X-jeweils ein Anion bedeutet; und
(iv) bis zu 30 Mol-% Einheiten von anderen monoethylenisch ungesättigten Verbindungen,
enthalten.

8. Wässrige Anschlämmung nach einem der vorstehenden Ansprüche, **dadurch gekennzeichnet, dass** die hydrolysierten Copolymerisate
(i) 5 bis 70 Mol-% Vinylcarbonsäureamideinheiten,
(ii) 3 bis 30 Mol-% Einheiten von monoethylenisch ungesättigten Sulfonsäuren, Phosphonsäuren und Salzen davon, oder 5 bis 45 Mol-% Einheiten von Acrylsäure, Methacrylsäure, Salzen und Gemischen davon,
bevorzugt 15 bis 45 Mol-% Acrylsäure- und/oder Methacrylsäureeinheiten, und
(iii) 10 bis 50 Mol-% Vinylamineinheiten in Salzform und/oder Amidineinheiten der Formel (III) und/oder (IV)
enthalten.

9. Wässrige Anschlämmung nach Anspruch 1, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomergemischs von
(b) wenigstens einem Monomer, das ausgewählt ist aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protonierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

10. Wässrige Anschlämmung nach Anspruch 1 oder 9, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomerengemischs von
(b) wenigstens einem Monomer aus der Gruppe (b₂), das ausgewählt ist aus monoethylenisch ungesättigten Carbonsäuren mit 3 bis 8 C-Atomen und den wasserlöslichen Salzen wie Alkalimetall-, Erdalkalimetall- und Ammoniumsalzen dieser Carbonsäuren,
(e) wenigstens einem ethylenisch ungesättigten Monomer, das ausgewählt ist aus der Gruppe der Ester von α,β-ethylenisch ungesättigten Mono- und Dicarbonsäuren mit C₂-C₁₂-Aminoalkoholen, die am Aminstickstoff C₁-C₈-monoalkyliert oder -dialkyliert sein können, sowie die Quaternisierungsprodukte dieser Ester mit C₁-C₈-Alkylchloriden, C₁-C₈-Dialkylsulfaten, C₁-C₁₆-Epoxiden oder Benzylchlorid,
(f) gegebenenfalls wenigstens einem von den Komponenten (b) und (e) verschiedenen monoethylenisch ungesättigten Monomer, das ausgewählt ist aus der Gruppe der N-Vinylcarbonsäureamide der allgemeinen Formel (I) 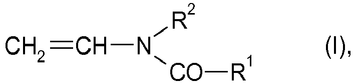 worin R¹ und R² unabhängig voneinander für H oder C₁- bis C₆-Alkyl stehen, (Meth)acrylamide und (Meth)acrylnitrile, und
(d) gegebenenfalls wenigstens eine Verbindung, die mindestens zwei ethylenisch ungesättigte Doppelbindungen im Molekül aufweist.

11. Wässrige Anschlämmung nach einem der Anspruch 1, 9 oder 10, **dadurch gekennzeichnet, dass** die wässrigen Anschlämmungen erhältlich sind durch Behandeln von wässrigen Anschlämmungen feinteiliger Füllstoffe mit mindestens einem wasserlöslichen amphoteren Copolymerisat und mindestens einer gequollenen Stärke, wobei das wasserlösliche amphotere Copolymerisat erhältlich ist durch Copolymerisieren eines Monomerengemischs von
(b) Acrylsäure, Methacrylsäure und/oder deren Alkali- oder Ammoniumsalzen,
(e) Dimethylaminoethyl(meth)acrylat Methochlorid,
(f) N-Vinylformamid, Acrylamid und/oder Acrylnitril.

12. Wässrige Anschlämmung nach einem der vorstehenden Ansprüche, **dadurch gekennzeichnet, dass** die wässrige Anschlämmung 1 bis 70 Gew.-% mindestens eines feinteiligen Füllstoffs enthält.

13. Wässrige Anschlämmung nach einem der vorstehenden Ansprüche, **dadurch gekennzeichnet, dass** die Menge an wasserlöslichem amphoteren Copolymerisat 0,01 bis 5 Gew.-%, bezogen auf den Füllstoff, beträgt.

14. Wässrige Anschlämmung nach einem der vorstehenden Ansprüche, **dadurch gekennzeichnet, dass** die Stärke kationisch, anionisch oder amphoter ist.

15. Wässrige Anschlämmung nach einem der vorstehenden Ansprüche, **dadurch gekennzeichnet, dass** die Stärke eine native Stärke ausgewählt aus der Gruppe bestehend aus Kartoffel-, Mais, Reis- oder Tapiokastärke oder eine chemisch modifizierte Stärke ist.

16. Wässrige Anschlämmung nach einem der vorstehenden Ansprüche, **dadurch gekennzeichnet, dass** die Menge an Stärke 0,1 bis 10 Gew.-%, bezogen auf den Füllstoff, beträgt.

17. Verfahren zur Herstellung einer wässrige Anschlämmung nach Anspruch 1, **dadurch gekennzeichnet, dass** man eine wässrige Anschlämmung mindestens eines feinteiligen Füllstoffes mit 0,01 bis 5 Gew.-%, bezogen auf den Füllstoff, mindestens eines wasserlösliches amphoteres Copolymerisats und mit 0,1 bis 10 Gew.-%, bezogen auf den Füllstoff, mindestens einer gequollenen Stärke behandelt.

18. Verfahren nach Anspruch 17, **dadurch gekennzeichnet, dass** das wasserlösliche amphotere Copolymerisat erhältlich ist durch Copolymerisieren eines Monomerengemischs von
(a) wenigstens einem N-Vinylcarbonsäureamid der allgemeinen Formel 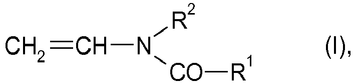 worin R¹ und R² unabhängig voneinander für H oder C₁- bis C₆-Alkyl stehen,
(b) wenigstens einem Monomer, das ausgewählt ist aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden,
(c) gegebenenfalls wenigstens einem von den Komponenten (a) und (b) verschiedenen monoethylenisch ungesättigten Monomer, und
(d) gegebenenfalls wenigstens eine Verbindung, die mindestens zwei ethylenisch ungesättigte Doppelbindungen im Molekül aufweist,
mit der Maßgabe, dass das Monomerengemisch mindestens ein Monomer (b) mit mindestens einer freien Säuregruppe und/oder einer Säuregruppe in Salzform enthält,
und anschließende teilweise oder vollständige Hydrolyse der Gruppen -CO-R¹ aus den in das Copolymerisat einpolymerisierten Monomeren (a).

19. Verfahren nach Anspruch 17, **dadurch gekennzeichnet, dass** das wasserlösliche amphotere Copolymerisat erhältlich ist durch Copolymerisieren eines Monomergemischs von
(b) wenigstens einem Monomer, das ausgewählt ist aus der Gruppe bestehend aus
(b₁) monoethylenisch ungesättigten Sulfonsäuren, Phosphonsäuren, Phosphorsäureestern und Derivaten davon, und
(b₂) monoethylenisch ungesättigten Mono- und Dicarbonsäuren, deren Salzen und Dicarbonsäureanhydriden,
(e) wenigstens einem ethylenisch ungesättigten Monomer, das eine kationische Gruppe und/oder eine durch Protonierung kationisch aufladbare Gruppe trägt,
(f) gegebenenfalls wenigstens einem von den Komponenten (b) und (e) verschiedenen monoethylenisch ungesättigten Monomer, und
(d) gegebenenfalls wenigstens eine Verbindung, die mindestens zwei ethylenisch ungesättigte Doppelbindungen im Molekül aufweist.

20. Verfahren nach einem der Ansprüche 17 bis 19, **dadurch gekennzeichnet, dass** die Behandlung der wässrigen Anschlämmung mindestens eines feinteiligen Füllstoffs mit mindestens einem wasserlöslichen amphoteren Copolymerisat und mindestens einer gequollener Stärke folgendermaßen erfolgt:
(A) Herstellung einer wässrigen Anschlämmung enthaltend mindestens eine ungequollene Stärke und mindestens ein wasserlösliches amphoteres Copolymerisat, anschließend Quellen der Stärke, Zugabe einer wässrigen Anschlämmung mindestens eines feinteiligen Füllstoffs zu dieser Stärke-Copolymerisat-Zusammensetzung,
(B) Herstellung einer wässrigen Anschlämmung enthaltend mindestens einen feinteiligen Füllstoff und mindestens ein wasserlösliches amphoteres Copolymerisat, Herstellung einer wässrigen Anschlämmung mindestens einer ungequollenen Stärke, anschließend Quellen der Stärke, Mischen der beiden wässrigen Anschlämmungen, oder
(C) Herstellung einer wässrigen Anschlämmung enthaltend mindestens eine ungequollene Stärke, Quellen der Stärke, Zugabe einer wässrigen Anschlämmung mindestens eines feinteiligen Füllstoffs, anschließend Zugabe einer wässrigen Lösung mindestens eines wasserslöslichen amphoteren Copolymerisats.

21. Verwendung der wässrigen Anschlämmung nach einem der Ansprüche 1 bis 16, als Zusatz zum Papierstoff bei der Herstellung von füllstoffhaltigem Papier, füllstoffhaltigem Karton oder füllstoffhaltiger Pappe durch Entwässern des Papierstoffs.

22. Papier, hergestellt unter Verwendung einer wässrigen Anschlämmung nach einem der Ansprüche 1 bis 16.

## Claims

1. An aqueous slurry of finely divided fillers which are at least partly coated with a composition comprising at least one water-soluble amphoteric copolymer and at least one swollen starch.

2. The aqueous slurry according to claim 1, wherein the aqueous slurries are obtainable by treating aqueous slurries of finely divided fillers with at least one water-soluble amphoteric copolymer and at least one swollen starch, the water-soluble amphoteric copolymer being obtainable by copolymerization of a monomer mixture of
(a) at least one N-vinylcarboxamide of the general formula 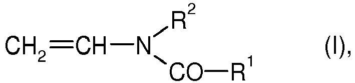 where R¹ and R², independently of one another, are H or C₁- to C₆-alkyl,
(b) at least one monomer which is selected from the group consisting of
(b₁) monoethylenically unsaturated sulfonic acids, phosphonic acids, phosphoric acid esters and derivatives thereof and
(b₂) monoethylenically unsaturated mono- and dicarboxylic acids, salts thereof and dicarboxylic anhydrides,
(c) optionally at least one monoethylenically unsaturated monomer differing from the components (a) and (b), and
(d) optionally at least one compound which has at least two ethylenically unsaturated double bonds in the molecule,
with the proviso that the monomer mixture comprises at least one monomer (b) having at least one free acid group and/or an acid group in salt form,
and subsequent partial or complete hydrolysis of the groups -CO-R¹ from the monomers (a) incorporated in the form of polymerized units in the copolymer.

3. The aqueous slurry according to claim 1 or 2, wherein the aqueous slurries are obtainable by treating aqueous slurries of finely divided fillers with at least one water-soluble amphoteric copolymer and at least one swollen starch, the water-soluble amphoteric copolymer being obtainable by copolymerization of a monomer mixture of
(a) at least one N-vinylcarboxamide of the general formula 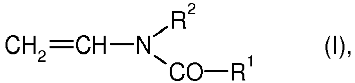 where R¹ and R², independently of one another, are H or C₁- to C₆-alkyl,
(b) at least one monomer from the group (b₂) which is selected from monoethylenically unsaturated carboxylic acids having 3 to 8 carbon atoms and the water-soluble salts, such as alkali metal, alkaline earth metal and ammonium salts, of these carboxylic acids,
(c) optionally at least one monoethylenically unsaturated monomer differing from the components (a) and (b), and
(d) optionally at least one compound which has at least two ethylenically unsaturated double bonds in the molecule,
and subsequent partial or complete hydrolysis of the groups -CO-R¹ from the monomers (a) incorporated in the form of polymerized units in the copolymer.

4. The aqueous slurry according to any of the above claims, wherein the aqueous slurries are obtainable by treating aqueous slurries of finely divided fillers with at least one water-soluble amphoteric copolymer and at least one swollen starch, the water-soluble amphoteric copolymer being obtainable by copolymerization of a monomer mixture of
(a) N-vinylformamide,
(b) acrylic acid, methacrylic acid, and/or the alkali metal or ammonium salts thereof, and
(c) optionally other monoethylenically unsaturated monomers,
and subsequent partial or complete hydrolysis of the vinylformamide units present in the copolymers.

5. The aqueous slurry according to any of the above claims, wherein the hydrolysis of the vinylformamide units present in the copolymers is effected by the action of acids, bases or enzymes.

6. The aqueous slurry according to any of the above claims, wherein the degree of hydrolysis of the vinylcarboxamide groups incorporated in the form of polymerized units is from 0.1 to 100 mol%.

7. The aqueous slurry according to any of the above claims, wherein the hydrolyzed copolymers comprise
(i) from 1 to 98 mol%, preferably from 1 to 75 mol%, of vinylcarboxamide units,
(ii) from 1 to 98 mol%, preferably from 1 to 55 mol%, of units of monoethylenically unsaturated sulfonic acids, phosphonic acids, phosphoric acid esters or derivatives thereof, or units of monoethylenically unsaturated mono- and dicarboxylic acids, salts thereof and dicarboxylic anhydrides, preferably from 1 to 98 mol%, preferably from 1 to 55 mol%, of units of at least one monoethylenically unsaturated carboxylic acid having 3 to 8 carbon atoms,
(iii) from 1 to 98 mol%, preferably from 1 to 55 mol%, of vinylamine units of the formula (II) and/or amidine units of the formula (III) and/or (IV) 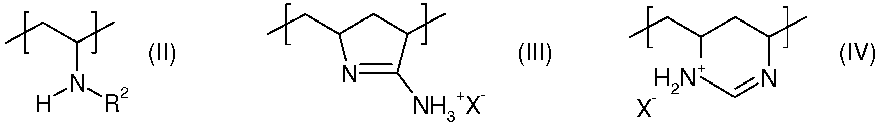 where, in the amidine units (III) and (IV), X- in each case is an anion, and
(iv) up to 30 mol% of units of other monoethylenically unsaturated compounds.

8. The aqueous slurry according to any of the above claims, wherein the hydrolyzed copolymers comprise
(i) from 5 to 70 mol% of vinylcarboxamide units,
(ii) from 3 to 30 mol% of units of monoethylenically unsaturated sulfonic acids, phosphonic acids and salts thereof, or from 5 to 45 mol% of units of acrylic acid, methacrylic acid, salts and mixtures thereof, preferably from 15 to 45 mol% of acrylic acid and/or methacrylic acid units, and
(iii) from 10 to 50 mol% of vinylamine units in salt form and/or amidine units of the formula (III) and/or (IV).

9. The aqueous slurry according to claim 1, wherein the aqueous slurries are obtainable by treating aqueous slurries of finely divided fillers with at least one water-soluble amphoteric copolymer and at least one swollen starch, the water-soluble amphoteric copolymer being obtainable by copolymerization of a monomer mixture of
(b) at least one monomer which is selected from the group consisting of (b₁
) monoethylenically unsaturated sulfonic acids, phosphonic acids, phosphoric acid esters and derivatives thereof, and
(b₂) monoethylenically unsaturated mono- and dicarboxylic acids, salts thereof and dicarboxylic anhydrides,
(e) at least one ethylenically unsaturated monomer which carries a cationic group and/or a group to which a cationic charge can be imparted by protonation,
(f) optionally at least one monoethylenically unsaturated monomer differing from the components (b) and (e), and
(d) optionally at least one compound which has at least two ethylenically unsaturated double bonds in the molecule.

10. The aqueous slurry according to claim 1 or 9, wherein the aqueous slurries are obtainable by treating aqueous slurries of finely divided fillers with at least one water-soluble amphoteric copolymer and at least one swollen starch, the water-soluble amphoteric copolymer being obtainable by copolymerization of a monomer mixture of
(b) at least one monomer from the group (b₂) which is selected from monoethylenically unsaturated carboxylic acids having 3 to 8 carbon atoms and the water-soluble salts, such as alkali metal, alkaline earth metal and ammonium salts, of these carboxylic acids,
(e) at least one ethylenically unsaturated monomer which is selected from the group consisting of the esters of α,β-ethylenically unsaturated mono- and dicarboxylic acids with C₂-C₁₂-amino alcohols which may be C₁-C₈-monoalkylated or C₁-C₈-dialkylated on the amine nitrogen, and the quaternization products of these esters with C₁-C₈-alkyl chlorides, C₁-C₈-dialkyl sulfates, C₁-C₁₆-epoxides or benzyl chloride,
(f) optionally at least one monoethylenically unsaturated monomer which differs from the components (b) and (e) and is selected from the group consisting of the N-vinylcarboxamides of the general formula (I) 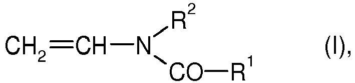 where R¹ and R² independently of one another, are H or C₁- to C₆-alkyl, (meth)acrylamides and (meth)acrylonitriles, and
(d) optionally at least one compound which has at least two ethylenically unsaturated double bonds in the molecule.

11. The aqueous slurry according to any of claims 1, 9 and 10, wherein the aqueous slurries are obtainable by treating aqueous slurries of finely divided fillers with at least one water-soluble amphoteric copolymer and at least one swollen starch, the water-soluble amphoteric copolymer being obtainable by copolymerization of a monomer mixture of
(b) acrylic acid, methacrylic acid, and/or the alkali metal or ammonium salts thereof,
(e) dimethylaminoethyl (meth)acrylate methochloride,
(f) N-vinylformamide, acrylamide and/or acrylonitrile.

12. The aqueous slurry according to any of the above claims, wherein the aqueous slurry comprises from 1 to 70% by weight of at least one finely divided filler.

13. The aqueous slurry according to any of the above claims, wherein the amount of water-soluble amphoteric copolymer is from 0.01 to 5% by weight, based on the filler.

14. The aqueous slurry according to any of the above claims, wherein the starch is cationic, anionic or amphoteric.

15. The aqueous slurry according to any of the above claims, wherein the starch is a natural starch selected from the group consisting of potato, corn, rice or tapioca starch or is a chemically modified starch.

16. The aqueous slurry according to any of the above claims, wherein the amount of starch is from 0.1 to 10% by weight, based on the filler.

17. A process for the preparation of an aqueous slurry according to claim 1, wherein an aqueous slurry of at least one finely divided filler is treated with from 0.01 to 5% by weight, based on the filler, of at least one water-soluble amphoteric copolymer and with from 0.1 to 10% by weight, based on the filler, of at least one swollen starch.

18. The process according to claim 17, wherein the water-soluble amphoteric copolymer is obtainable by copolymerization of a monomer mixture of
(a) at least one N-vinylcarboxamide of the general formula 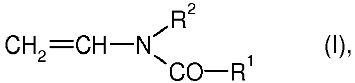 where R¹ and R² independently of one another, are H or C₁- to C₆-alkyl,
(b) at least one monomer which is selected from the group consisting of
(b₁) monoethylenically unsaturated sulfonic acids, phosphonic acids, phosphoric acid esters and derivatives thereof and
(b₂) monoethylenically unsaturated mono- and dicarboxylic acids, salts thereof and dicarboxylic anhydrides,
(c) optionally at least one monoethylenically unsaturated monomer differing from the components (a) and (b), and
(d) optionally at least one compound which has at least two ethylenically unsaturated double bonds in the molecule,
with the proviso that the monomer mixture comprises at least one monomer (b) having at least one free acid group and/or an acid group in salt form,
and subsequent partial or complete hydrolysis of the groups -CO-R¹ from the monomers (a) incorporated in the form of polymerized units in the copolymer.

19. The process according to claim 17, wherein the water-soluble amphoteric copolymer is obtainable by copolymerization of a monomer mixture of
(b) at least one monomer which is selected from the group consisting of
(b₁) monoethylenically unsaturated sulfonic acids, phosphonic acids, phosphoric acid esters and derivatives thereof, and
(b₂) monoethylenically unsaturated mono- and dicarboxylic acids, salts thereof and dicarboxylic anhydrides,
(e) at least one ethylenically unsaturated monomer which carries a cationic group and/or a group to which a cationic charge can be imparted by protonation,
(f) optionally at least one monoethylenically unsaturated monomer differing from the components (b) and (e), and
(d) optionally at least one compound which has at least two ethylenically unsaturated double bonds in the molecule.

20. The process according to any of claims 17 to 19, wherein the treatment of the aqueous slurry of at least one finely divided filler with at least one water-soluble amphoteric copolymer and at least one swollen starch is effected as follows:
(A) preparation of an aqueous slurry comprising at least one unswollen starch and at least one water-soluble amphoteric copolymer, subsequent swelling of the starch, addition of an aqueous slurry of at least one finely divided filler to this starch-copolymer composition,
(B) preparation of an aqueous slurry comprising at least one finely divided filler and at least one water-soluble amphoteric copolymer, preparation of an aqueous slurry of at least one unswollen starch, subsequent swelling of the starch, mixing of the two aqueous slurries, or
(C) preparation of an aqueous slurry comprising at least one unswollen starch, swelling of starch, addition of an aqueous slurry of at least one finely divided filler, subsequent addition of an aqueous solution of at least one water-soluble amphoteric copolymer.

21. The use of the aqueous slurries according to any of claims 1 to 16 as an additive to the paper stock in the production of filler-containing paper, filler-containing cardboard or filler-containing board by drainage of the paper stock.

22. A paper produced using an aqueous slurry according to any of claims 1 to 16.

## Revendications

1. Dispersion aqueuse de charges finement divisées, qui sont revêtues au moins en partie avec une composition d'au moins un copolymère amphotère soluble dans l'eau et d'au moins un amidon gonflé.

2. Suspensions aqueuses selon la revendication 1, **caractérisées en ce que** les suspensions aqueuses peuvent être obtenues par traitement de suspensions aqueuses de charges finement divisées avec au moins un copolymère amphotère soluble dans l'eau et au moins un amidon gonflé, le copolymère amphotère soluble dans l'eau pouvant être obtenu par copolymérisation d'un mélange de monomères de
(a) au moins un amide d'acide N-vinylcarboxylique de formule générale 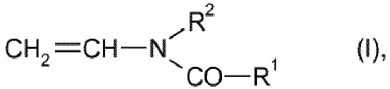 dans laquelle R¹ et R² représentent indépendamment l'un de l'autre H ou alkyle en C₁ à C₆,
(b) au moins un monomère, qui est choisi dans le groupe constitué par
(b₁) les acides sulfoniques monoéthyléniquement insaturés, les acides phosphoniques, les esters d'acides phosphoriques et leurs dérivés, et
(b₂) les acides mono- et dicarboxyliques monoéthyléniquement insaturés, leurs sels et les anhydrides d'acides dicarboxyliques,
(c) éventuellement au moins un monomère monoéthyléniquement insaturé différent des composants (a) et (b), et
(d) éventuellement au moins un composé qui comprend au moins deux doubles liaisons éthyléniquement insaturées par molécule,
à condition que le mélange de monomères contienne au moins un monomère (b) contenant au moins un groupe acide libre et/ou un groupe acide sous forme saline, puis hydrolyse partielle ou totale des groupes -CO-R¹ des monomères (a) copolymérisés dans le copolymère.

3. Suspension aqueuse selon la revendication 1 ou 2, **caractérisée en ce que** les suspensions aqueuses peuvent être obtenues par traitement de suspensions aqueuses de charges finement divisées avec au moins un copolymère amphotère soluble dans l'eau et au moins un amidon gonflé, le copolymère amphotère soluble dans l'eau pouvant être obtenu par copolymérisation d'un mélange de monomères de
(a) au moins un amide d'acide N-vinylcarboxylique de formule générale 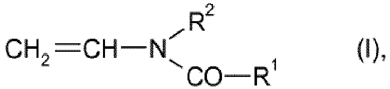 dans laquelle R¹ et R² représentent indépendamment l'un de l'autre H ou alkyle en C₁ à C₆,
(b) au moins un monomère du groupe (b₂), qui est choisi parmi les acides carboxyliques monoéthyléniquement insaturés de 3 à 8 atomes C et les sels solubles dans l'eau, tels que les sels de métaux alcalins, de métaux alcalino-terreux et d'ammonium de ces acides carboxyliques,
(c) éventuellement au moins un monomère monoéthyléniquement insaturé différent des composants (a) et (b), et
(d) éventuellement au moins un composé qui comprend au moins deux doubles liaisons éthyléniquement insaturées par molécule,
puis hydrolyse partielle ou totale des groupes -CO-R¹ des monomères (a) copolymérisés dans le copolymère.

4. Suspension aqueuse selon l'une quelconque des revendications précédentes, **caractérisée en ce que** les suspensions aqueuses peuvent être obtenues par traitement de suspensions aqueuses de charges finement divisées avec au moins un copolymère amphotère soluble dans l'eau et au moins un amidon gonflé, le copolymère amphotère soluble dans l'eau pouvant être obtenu par copolymérisation d'un mélange de monomères de
(a) N-vinylformamide,
(b) acide acrylique, acide méthacrylique et/ou leurs sels de métaux alcalins ou d'ammonium, et
(c) éventuellement d'autres monomères monoéthyléniquement insaturés,
puis hydrolyse partielle ou totale des unités vinylformamide contenues dans le copolymère.

5. Suspension aqueuse selon l'une quelconque des revendications précédentes, **caractérisée en ce que** l'hydrolyse des unités vinylformamide contenues dans le copolymère a lieu sous l'effet d'acides, de bases ou d'enzymes.

6. Suspension aqueuse selon l'une quelconque des revendications précédentes, **caractérisée en ce que** le degré d'hydrolyse des groupes amide d'acide vinylcarboxylique copolymérisés est de 0,1 à 100 % en moles.

7. Suspensions aqueuses selon l'une quelconque des revendications précédentes, **caractérisées en ce que** les copolymères hydrolysés contiennent
(i) 1 à 98 % en moles, de préférence 1 à 75 % en moles d'unités amide d'acide vinylcarboxylique,
(ii) 1 à 98 % en moles, de préférence 1 à 55 % en moles, d'unités d'acides sulfoniques monoéthyléniquement insaturés, d'acides phosphoniques, d'esters d'acides phosphoriques, leurs dérivés, ou d'unités d'acides mono- et dicarboxyliques monoéthyléniquement insaturés, leurs sels et d'anhydrides d'acides dicarboxyliques,
de préférence 1 à 98 % en moles, de préférence 1 à 55 % en moles, d'unités d'au moins un acide carboxylique monoéthyléniquement insaturé de 3 à 8 atomes C,
(iii) 1 à 98 % en moles, de préférence 1 à 55 % en moles, d'unités vinylamine de formule (II) et/ou d'unités amidine de formule (III) et/ou (IV), 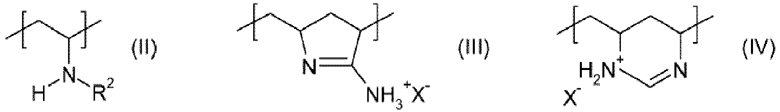 dans les unités amidine (III) et (IV), X⁻ signifiant à chaque fois un anion ;
et
(iv) jusqu'à 30 % en moles d'unités d'autres composés monoéthyléniquement insaturés.

8. Suspension aqueuse selon l'une quelconque des revendications précédentes, **caractérisée en ce que** les copolymères hydrolysés contiennent
(i) 5 à 70 % en moles d'unités amide d'acide vinylcarboxylique,
(ii) 3 à 30 % en moles d'unités d'acides sulfoniques monoéthyléniquement insaturés, d'acides phosphoniques et leurs sels, ou 5 à 45 % en moles d'unités d'acide acrylique, d'acide méthacrylique, leurs sels et leurs mélanges,
de préférence 15 à 45 % en moles d'unités acide acrylique et/ou acide méthacrylique, et
(iii) 10 à 50 % en moles d'unités vinylamine sous forme saline et/ou d'unités amidine de formule (III) et/ou (IV).

9. Suspension aqueuse selon la revendication 1, **caractérisée en ce que** les suspensions aqueuses peuvent être obtenues par traitement de suspensions aqueuses de charges finement divisées avec au moins un copolymère amphotère soluble dans l'eau et au moins un amidon gonflé, le copolymère amphotère soluble dans l'eau pouvant être obtenu par copolymérisation d'un mélange de monomères de
(b) au moins un monomère, qui est choisi dans le groupe constitué par
(b₁) les acides sulfoniques monoéthyléniquement insaturés, les acides phosphoniques, les esters d'acides phosphoriques et leurs dérivés, et
(b₂) les acides mono- et dicarboxyliques monoéthyléniquement insaturés, leurs sels et les anhydrides d'acides dicarboxyliques,
(e) au moins un monomère éthyléniquement insaturé qui porte un groupe cationique et/ou un groupe pouvant être chargé cationiquement par protonation,
(f) éventuellement au moins un monomère monoéthyléniquement insaturé différent des composants (b) et (e), et
(d) éventuellement au moins un composé qui comprend au moins deux doubles liaisons éthyléniquement insaturées par molécule.

10. Suspension aqueuse selon la revendication 1 ou 9, **caractérisée en ce que** les suspensions aqueuses peuvent être obtenues par traitement de suspensions aqueuses de charges finement divisées avec au moins un copolymère amphotère soluble dans l'eau et au moins un amidon gonflé, le copolymère amphotère soluble dans l'eau pouvant être obtenu par copolymérisation d'un mélange de monomères de
(b) au moins un monomère du groupe (b₂), qui est choisi parmi les acides carboxyliques monoéthyléniquement insaturés de 3 à 8 atomes C et les sels solubles dans l'eau, tels que les sels de métaux alcalins, de métaux alcalino-terreux et d'ammonium de ces acides carboxyliques,
(e) au moins un monomère éthyléniquement insaturé, qui est choisi dans le groupe des esters d'acides mono- et dicarboxyliques α,β-éthyléniquement insaturés avec des aminoalcools en C₂-C₁₂, qui peuvent être monoalkylés ou dialkylés en C₁-C₈ sur l'azote de l'amine, ainsi que les produits de quaternisation de ces esters avec des chlorures d'alkyle en C₁-C₈, des sulfates de dialkyle en C₁-C₈, des époxydes en C₁-C₁₆ ou du chlorure de benzyle,
(f) éventuellement au moins un monomère monoéthyléniquement insaturé différent des composants (b) et (e), qui est choisi dans le groupe des amides d'acides N-vinylcarboxyliques de formule générale (I) 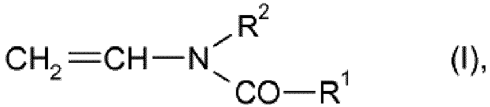 dans laquelle R¹ et R² représentent indépendamment l'un de l'autre H ou alkyle en C₁ à C₆,
des (méth)acrylamides et des (méth)acrylonitriles, et
(d) éventuellement au moins un composé qui comprend au moins deux doubles liaisons éthyléniquement insaturées par molécule.

11. Suspension aqueuse selon l'une quelconque des revendications 1, 9 ou 10, **caractérisée en ce que** les suspensions aqueuses peuvent être obtenues par traitement de suspensions aqueuses de charges finement divisées avec au moins un copolymère amphotère soluble dans l'eau et au moins un amidon gonflé, le copolymère amphotère soluble dans l'eau pouvant être obtenu par copolymérisation d'un mélange de monomères de
(b) acide acrylique, acide méthacrylique et/ou leurs sels d'alcalis ou d'ammonium,
(e) (méth)acrylate de diméthylaminoéthyle méthochlorure,
(f) N-vinylformamide, acrylamide et/ou acrylonitrile.

12. Suspension aqueuse selon l'une quelconque des revendications précédentes, **caractérisée en ce que** la suspension aqueuse contient 1 à 70 % en poids d'au moins une charge finement divisée.

13. Suspension aqueuse selon l'une quelconque des revendications précédentes, **caractérisée en ce que** la quantité de copolymère amphotère soluble dans l'eau est de 0,01 à 5 % en poids, par rapport à la charge.

14. Suspension aqueuse selon l'une quelconque des revendications précédentes, **caractérisée en ce que** l'amidon est cationique, anionique ou amphotère.

15. Suspension aqueuse selon l'une quelconque des revendications précédentes, **caractérisée en ce que** l'amidon est un amidon naturel choisi dans le groupe constitué par l'amidon de pomme de terre, de maïs, de riz ou de tapioca, ou un amidon modifié chimiquement.

16. Suspension aqueuse selon l'une quelconque des revendications précédentes, **caractérisée en ce que** la quantité d'amidon est de 0,1 à 10 % en poids, par rapport à la charge.

17. Procédé de fabrication d'une suspension aqueuse selon la revendication 1, **caractérisé en ce qu'**une suspension aqueuse d'au moins une charge finement divisée est traitée avec 0,01 à 5 % en poids, par rapport à la charge, d'au moins un copolymère amphotère soluble dans l'eau et avec 0,1 à 10 % en poids, par rapport à la charge, d'au moins un amidon gonflé.

18. Procédé selon la revendication 17, **caractérisé en ce que** le copolymère amphotère soluble dans l'eau peut être obtenu par copolymérisation d'un mélange de monomères de
(a) au moins un amide d'acide N-vinylcarboxylique de formule générale 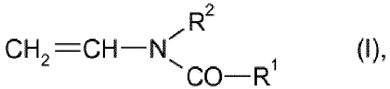 dans laquelle R¹ et R² représentent indépendamment l'un de l'autre H ou alkyle en C₁ à C₆,
(b) au moins un monomère, qui est choisi dans le groupe constitué par
(b₁) les acides sulfoniques monoéthyléniquement insaturés, les acides phosphoniques, les esters d'acides phosphoriques et leurs dérivés, et
(b₂) les acides mono- et dicarboxyliques monoéthyléniquement insaturés, leurs sels et les anhydrides d'acides dicarboxyliques,
(c) éventuellement au moins un monomère monoéthyléniquement insaturé différent des composants (a) et (b), et
(d) éventuellement au moins un composé qui comprend au moins deux doubles liaisons éthyléniquement insaturées par molécule,
à condition que le mélange de monomères contienne au moins un monomère (b) contenant au moins un groupe acide libre et/ou un groupe acide sous forme saline, puis hydrolyse partielle ou totale des groupes -CO-R¹ des monomères (a) copolymérisés dans le copolymère.

19. Procédé selon la revendication 17, **caractérisé en ce que** le copolymère amphotère soluble dans l'eau peut être obtenu par copolymérisation d'un mélange de monomères de
(b) au moins un monomère, qui est choisi dans le groupe constitué par
(b₁) les acides sulfoniques monoéthyléniquement insaturés, les acides phosphoniques, les esters d'acides phosphoriques et leurs dérivés, et
(b₂) les acides mono- et dicarboxyliques monoéthyléniquement insaturés, leurs sels et les anhydrides d'acides dicarboxyliques,
(e) au moins un monomère éthyléniquement insaturé qui porte un groupe cationique et/ou un groupe pouvant être chargé cationiquement par protonation,
(f) éventuellement au moins un monomère monoéthyléniquement insaturé différent des composants (b) et (e), et
(d) éventuellement au moins un composé qui comprend au moins deux doubles liaisons éthyléniquement insaturées par molécule.

20. Procédé selon l'une quelconque des revendications 17 à 19, **caractérisé en ce que** le traitement de la suspension aqueuse d'au moins une charge finement divisée avec au moins un copolymère amphotère soluble dans l'eau et au moins un amidon gonflé a lieu de la manière suivante :
(A) fabrication d'une suspension aqueuse contenant au moins un amidon non gonflé et au moins un copolymère amphotère soluble dans l'eau, puis gonflement de l'amidon, ajout d'une suspension aqueuse d'au moins une charge finement divisée à cette composition amidon-copolymère,
(B) fabrication d'une suspension aqueuse contenant au moins une charge finement divisée et au moins un copolymère amphotère soluble dans l'eau, fabrication d'une suspension aqueuse d'au moins un amidon non gonflé, puis gonflement de l'amidon, mélange des deux suspensions aqueuse, ou
(C) fabrication d'une suspension aqueuse contenant au moins un amidon non gonflé, gonflement de l'amidon, ajout d'une suspension aqueuse d'au moins une charge finement divisée, puis ajout d'une solution aqueuse d'au moins un copolymère amphotère soluble dans l'eau.

21. Utilisation de la suspension aqueuse selon l'une quelconque des revendications 1 à 16 en tant qu'additif pour la pâte à papier lors de la fabrication d'un papier contenant une charge ou d'un carton contenant une charge par déshydratation de la pâte à papier.

22. Papier, fabriqué en utilisant une suspension aqueuse selon l'une quelconque des revendications 1 à 16.
